(19) Europäisches Patentamt
European Patent Office
Office européen des brevets

(11) EP 0 452 786 B1

(12) EUROPÄISCHE PATENTSCHRIFT

(45) Veröffentlichungstag und Bekanntmachung des Hinweises auf die Patenterteilung:
**31.01.2001 Patentblatt 2001/05**

(51) Int Cl.[7]: **B05D 7/02**, B05D 5/06, B05D 7/00

(21) Anmeldenummer: **91105648.9**

(22) Anmeldetag: **10.04.1991**

(54) **Verfahren zur Herstellung von Mehrschichtüberzügen**

Process for making multilayer coatings

Procédé pour fabriquer des revêtements multicouches

(84) Benannte Vertragsstaaten:
**AT BE CH DE ES FR GB GR IT LI NL SE**

(30) Priorität: **11.04.1990 DE 4011633**

(43) Veröffentlichungstag der Anmeldung:
**23.10.1991 Patentblatt 1991/43**

(73) Patentinhaber: **E.I. DU PONT DE NEMOURS AND COMPANY**
**Wilmington Delaware 19898 (US)**

(72) Erfinder:
- **Göldner, Wolfgang, Dr.**
  **W-5628 Heiligenhaus (DE)**
- **Lenhard, Werner, Dr.**
  **W-5600 Wuppertal 2 (DE)**
- **Lüttenberg, Albrecht**
  **W-5600 Wuppertal 1 (DE)**
- **Patzschke, Hans-Peter, Dr.**
  **W-5600 Wuppertal 2 (DE)**

(74) Vertreter: **Gille Hrabal Struck Neidlein Prop Roos**
**Patentanwälte**
**Brucknerstrasse 20**
**40593 Düsseldorf (DE)**

(56) Entgegenhaltungen:
**EP-A- 0 180 051**
**EP-A- 0 259 647**
**EP-A- 0 260 448**
**DE-A- 3 630 667**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 452 786 B1

## Beschreibung

Aus ökologischen Gründen wird in der Automobilindustrie ein voller Lackaufbau mit wasserverdünnbaren Kunstharzen angestrebt. In modernen Lackaufbauten werden heute waserverdünnbare anionische Harze als Füller oder als Basecoats nacheinander aufgespritzt. Decklackierungen werden häufig nach dem "Basecoat-Clearcoat-Verfahren" aufgebracht, wobei beide Schichten üblicherweise in einer gemeinsamen Einbrennstufe gehärtet werden (Naß-in-Naß-Verfahren). Besondere Bedeutung hat das Verfahren bei der Herstellung von Metalleffektlackierungen erlangt, wird jedoch auch mit Uni-Farbtönen durchgeführt.

Für Korrosionsschutzgrundierungen werden wasserverdünnbare modifizierte Aminoepoxidharze eingesetzt, die mittels Strom auf dem als Kathode geschalteten leitenden Untergrund koagulieren. In der DE-A-30 03 286 ein als Kathode geschaltetes leitfähiges Substrat beschichtet mit einer Metallpulver (Aluminiumpulver) enthaltenden Kunstharzschicht. Danach kann naß-in-naß eine durchsichtige Schicht aufgebracht und beide Schichten gemeinsam ohne Zwischentrocknung durch Einbrennen gehärtet werden. Um brauchbare Korrosionsschutzergebnisse zu erhalten, muß nach den Beispielen etwa 15 bis 25 Minuten auf 170 bis 200 °C erwärmt werden. Es werden dabei Basecoats erhalten, die eine Tendenz zum Vergilben haben. Nähere Angaben über die Klarlackschicht werden nicht gemacht.

In der DE-A 34 36 346, DE-A 36 28 119 und DE-A 36 28 122 werden zur Herstellung von Grundierungen oder Einschichtüberzügen wäßrige nichtvergilbende Elektrotauchlacküberzugsmittel beschrieben, die als Basisharz primäre und/oder sekundäre Hydroxylgruppen und primäre, sekundäre und/oder tertiäre Aminogruppen enthaltende Kunstharz-Bindemittel wie Amino-Poly(meth)acrylatharze mit einer Hydroxylzahl von 80 bis 250 (mg KOH pro g Festharz) und einer mittleren Molmasse ($\overline{M}n$) von 250 bis 10000 enthalten. Um einen optimalen Korrosionsschutz zu erhalten, werden diese Harze bei 160 bis 190°C ohne Aufbringen eines Klarlackes gehärtet.

Das Auftragen einer kationischen Schicht auf einem metallischen Untergrund durch Spritzen oder Tauchen führt mit steigender Schichtstärke zu erheblichen Nachteilen in der Korrosionsschutzwirkung. Ein elektrophoretisches Abscheiden des Basecoats gelingt nicht in einer Autolackierung auf einem nichtleitenden Füller.

Aufgabe der Erfindung ist die Bereitstellung eines Verfahrens zur Herstellung von Mehrschichtüberzügen unter Verwendung wässriger Basislacke, die ohne Schwierigkeiten mit wässrigen oder lösemittelhaltigen Klarlacken überlackiert werden können und nach dem Härten zu einem Lackaufbau mit guten optischen Eigenschaften und guter Beständigkeit gegen Feuchtigkeitsbelastungen führen.

Diese Aufgabe wird durch ein Verfahren zur Herstellung eines Mehrschichtüberzuges auf einer elektrisch nicht leitenden Oberfläche eines mit einer üblichen Grundierung und gegebenenfalls einem üblichen Füller versehenen Substrat gelöst, das dadurch gekennzeichnet ist, daß ein wässriger Basislack aus einer deckende, transparente und/oder effektgebende Pigmente und gegebenenfalls Füllstoffe, sowie gegebenenfalls übliche Lackadditive und bis zu 15 Gew.%, bezogen auf den zum Auftrag fertigen Basislack, organische Lösungsmittel enthaltenden wässrigen Dispersion aufgetragen wird, wobei die Dispersion enthält:

A. 70 bis 100 Gew.% eines mit Säuren vollständig oder teilweise neutralisierten kationischen Poly (meth)acrylat-, Polyester-, Polyurethan- und/oder Polyurethan-Harnstoff-Harzes, mit einem Zahlenmittel der Molmasse (Mn) von 500 bis 500000, einer OH-Zahl von 0 - 450, einer Aminzahl von 20 - 200 und einer Glasübergangstemperatur von -50 - +150°C und

B. 0 bis 30 Gew.% eines Amin-Formaldehyd-Kondensationsharzes und/oder blockierten Polyisocyanats, jeweils mit mindestens zwei gegenüber den Amino- und/oder OH-Gruppen und/oder Urethan- und/oder Harnstoffgruppen der Komponente A) reaktiven Gruppen pro Molekül,

wobei sich die Gewichtsprozente der Komponenten A) und B) jeweils auf Festharz beziehen und sich auf 100 Gew.% addieren, und das Verhältnis von Pigment und Füllstoffen zu der Summe der Komponenten A) und B) 0,05 bis 1,2 zu 1, bezogen auf das Festkörpergewicht und der Gesamtfestkörpergehalt des Basislackes 15 bis 50 Gew.% betragen.

Anschließend wird beim erfindungsgemäßen Verfahren ein Klarlack auf Basis lösemittelhaltiger oder wasserhaltiger nicht-pigmentierter Harze oder eines Klarlackpulvers aufgetragen, wobei Basis- und Klarlack entweder getrennt oder gemeinsam, gegebenenfalls nach kurzem Zwischentrocknen, bei Temperaturen unter 160°C gehärtet werden.

Bei der erfindungsgemäß im Basislack eingesetzten Komponente A) handelt es sich um ein Poly(meth)acrylat-, Polyester-, Polyurethan- und/oder Polyurethan-Harnstoff-Harz, das basische Gruppen aufweist, die durch mindestens teilweise Neutralisation ionische Salze bilden, z.B. Kationen bildende Gruppen.

Das basische Gruppen enthaltende Poly(meth)acrylatharz der Komponente A) wird durch Lösungspolymerisation oder durch Emulsionspolymerisation bzw. - copolymerisation hergestellt und hat eine Hydroxylzahl von 0 bis 450, bevorzugt 30 bis 200 mg KOH pro g Festharz. Die zahlenmittlere Molmasse (Mn) liegt bei 500 bis 50000 und bevorzugt bei 1000 bis 10000 (gemessen durch Gelpermeationschromatographie, geeicht mit Polystyrolfraktionen). Seine Viskosität beträgt bevorzugt 0,1 bis 10 Pa.s, insbesondere 0,5 bis 5 Pa.s in 50%iger Lösung in Monoglykolethern (insbesondere

Butoxyethanol) bei 25°C. Seine Glasübergangstemperatur (errechnet aus den Glasübergangstemperaturen der Homopolymerisate) liegt -50 bis +150°C, bevorzugt bei -20 bis +75°C. Die geeigneten mittleren Molmassen bzw. Viskositäten können auch dadurch erhalten werden, daß Harze mit höherer und niedrigerer Molmasse bzw. Viskosität vermischt werden. Die Aminzahl liegt bei 20 bis 200, bevorzugt bei 30 bis 150 und besonders bevorzugt bei 45 bis 100 (mg KOH pro g Festharz).

Die basische Gruppen enthaltenden Poly(meth)acrylatharze (Komponente A)) können nach dem Stand der Technik, wie er beispielsweise in der DE-A 15 46 854, der DE-A 23 25 177 oder der DE-A 23 57 152 beschrieben wird, hergestellt werden. Einsetzbare ethylenisch ungesättigte Monomere sind praktisch alle radikalisch polymerisierbaren Monomeren, wobei jedoch die üblichen Einschränkungen für Copolymerisationen gelten, die durch das Q- und e-Schema nach Alfrey und Price, bzw. durch die Copolymerisationsparameter vorgegeben sind (vgl. Brandrup und Immergut, Polymer Handbuch, 2nd edition, John Wiley and Sons, New York 1975). Das basische Poly(meth)acrylatharz kann neben den Aminogruppen auch Oniumgruppen, wie quaternäre Ammoniumgruppen, Sulfonium- oder Phosphoniumgruppen enthalten. Besonders bevorzugt werden Aminogruppen, die das Harz nach Neutralisation mit organischen Säuren mit Wasser verdünnbar machen. Ein derartiges Aminogruppen und Hydroxylgruppen enthaltendes Mischpolymeres wird durch Polymerisation in Lösung oder durch Emulsionspolymerisation erhalten. Die Lösungspolymerisation wird bevorzugt.

Das Poly(meth)acrylatharz der Komponente A) wird aus (Meth)Acrylatmonomeren gegebenenfalls zusammen mit weiteren radikalisch polymerisierbaren Monomoren hergestellt. Die radikalisch polymerisierbaren Monomeren, d.h. die (Meth)Acrylatmonomeren und/oder weiteren radikalisch polymerisierbaren Monomeren sind radikalisch polymerisierbare aminogruppenhaltige Monomere oder radikalisch polymerisierbare Monomeren, die sowohl Aminogruppen als auch Hydroxylgruppen enthalten. Sie können im Gemisch mit anderen radikalisch polymerisierbaren Monomeren eingesetzt werden.

Dabei wird bevorzugt so gearbeitet, daß 6 bis 40 Gewichtsteile radikalisch polymerisierbarer aminogruppenhaltiger Monomerer und 4 bis 50 Gewichtsteile radikalisch polymerisierbarer hydroxylgruppenhaltiger Monomerer oder 8 bis 60 Gewichtsteile radikalisch polymerisierbarer hydroxy- und aminogruppenhaltiger Monomerer pro 10 bis 90 Gewichtsteile der radikalisch polymerisierbaren Monomeren, die keine weiteren reaktiven Gruppen enthalten, eingesetzt werden. Von den eingesetzten radikalisch polymerisierbaren Monomeren sind bevorzugt mehr als 50 Gew.% und besonders bevorzugt mehr als 70 Gew.% (Meth)Acrylatmonomere. Diese (Meth)Acrylatmonomere können beispielsweise über ihre Esterfunktion Aminogruppen und/oder Hydroxylgruppen enthalten oder können als weitere nichtfunktionelle Monomere auftreten.

In der vorliegenden Beschreibung wird unter (Meth)Acrylat Acrylat und/oder Methacrylat verstanden.

Gemäß einer bevorzugten Ausführungsform können von den 10 bis 90 Gewichtsteilen der radikalisch polymerisierbaren Monomeren, die keine weiteren reaktiven Gruppen enthalten, 0,1 bis 7 Gewichtsteile ersetzt sein durch ethylenisch polyungesättigte Monomere.

Als aminogruppenhaltige Monomere können beispielsweise Monomere der allgemeinen Formel

$$R\text{-}CH{=}CH'\text{-}X\text{-}A\text{-}N(R'')_2$$

eingesetzt werden, wobei

R = -R' oder $-X-C_nH_{2n+1}$
R' = -H oder $-C_nH_{2n+1}$
R"= -R', $-C_nH_{2n}OH$ und/oder $C_nH_{2n}NR_2$

wobei R wie vorstehend definiert ist, und

X = -COO-, -CONH-, $-CH_2O-$ oder -O-,
A = $C_nH_{2n}$- oder

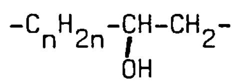

und
n = 1 bis 8, bevorzugt 1 bis 3 bedeuten.

Beispiele für ungesättigte N-gruppenhaltige Monomere sind N-Dialkyl- oder N-Monoalkyl-aminoalkyl(meth)acrylate oder die entsprechenden N-Alkanol-Verbindungen wie beispielsweise N-Diethyl-aminoethylmethacrylat oder N-tert-Butylaminoethylacrylat, N-Dialkyl- oder N-Monoalkyl-aminoalkyl(meth)acrylamid oder die entsprechende N-Alkanol-Verbindungen wie beispielsweise N-Dimethyl-amino-ethanolacrylamid und/oder Vinylgruppen enthaltende heterocyclische Verbindungen mit einem oder mehreren basischen Stickstoffatomen wie beispielsweise N-Vinylimidazol. Unter radikalisch polymerisierbaren hydroxylgruppenhaltigen Monomeren werden beispielsweise solche verstanden, die außer einer polymerisierbaren ethylenisch ungesättigten Gruppe noch mindestens eine Hydroxylgruppe an einem $C_2$ bis $C_{20}$ linearen, verzweigten oder cyclischen Kohlenstoffgerüst enthalten. Es sind hauptsächlich ungesättigte Veresterungsprodukte der allgemeinen Formel

$$R - CH = CR' - X - B$$

worin

R, R' und X wie vorstehend definiert sind, und
B eine lineare oder verzweigte $C_{1-6}$-Alkylgruppe mit 1-3 OH-Gruppen ist.

Besonders geeignet sind (Meth)acrylsäurehydroxyalkylester wie beispielsweise 2-Hydroxyethylacrylat, 2-Hydroxy-propylmethacrylat, Butandiol-1,4-monoacrylat, 2,3-Dihydroxy-propylmethacrylat, Pentaerythrit-monomethacrylat, Polypropylenglykolmonoacrylat oder auch Fumarsäuredihydroxyalkylester. Es können jedoch auch N-Hydroxyalkyl(meth) acrylamid oder N-Hydroxyalkylfumarsäure-mono- oder diamide wie beispielsweise N-Hydroxymethyl-acrylamid oder N- (2-Hydroxypropyl)-methacrylamid eingesetzt werden. Besonders elastische Eigenschaften sind beim Einsatz eines Reaktionsproduktes von Hydroxyalkyl(meth)acrylat mit ε-Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2,3-Dihydroxypropyl-monoallylether, Trimethylpropan-monoallylether oder 2,3-Dihydroxyypropansäureallylester. Besonders geeignet sind Hydroxyethyl-, Hydroxypropyl- und/oder Butandiol-1,4-mono(meth)acrylat.

Die Auswahl der zusätzlich möglichen radikalisch polymerisierbaren Monomeren, die keine weiteren reaktiven Gruppen enthalten, erfolgt nach den mechanischen Eigenschaften des Films und der Verträglichkeit der dabei eingesetzten Harzkombination. Es werden Acrylsäure-alkylester, Methacrylsäure-alkylester, Maleinsäure- und/oder Fumarsäuredialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol, α-substituierte Styrole wie α-Methylstyrol, o-, m- und p-Alkylstyrole wie Vinyltoluol oder p-tert-Butylstyrol, halogenierte Vinylbenzole wie o- oder p-Chlorstyrol, Methacrylsäureester mit kurzer Kette wie Methylmethacrylat, Ethylmethylacrylat, Propylmethacrylat, Butylmethacrylat, Cyclohexylmethacrylat, Isobornyl-methacrylat, Dihydrodicyclopentadienyl-methacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert-Butylacrylat, 2-Ethylhexylacrylat und/oder Lauryl-acrylat. Es können auch ungesättigte Ether wie Ethoxyethylmethacrylat oder Tetrahydrofurfurylacrylat eingesetzt werden. Monomere vom Vinylestertyp, vorzugsweise Vinylester-α-verzweigter Monocarbonsäuren, besonders der Versaticsäure-vinylester, können auch einpolymerisiert werden, wenn geeignete Reaktionsbedingungen und Reaktionscomonomere ausgewählt werden. Unter ethylenisch polyungesättigten Monomeren werden Verbindungen mit mindestens 2 radikalisch polymerisierbaren Doppelbindungen nach der allgemeinen Formel

$$R\text{-}CH{=}CR'D\text{-}(\text{-}CR'{=}CH\text{-}R)_m'$$

und m = 1 bis 3, bevorzugt m = 1, verstanden, wobei außer den weiter oben angegebenen Bedeutungen für R und R' D das allgemeine, tragende chemische Grundgerüst für die reaktive Doppelbindung ist. Beispiele für D sind der m- oder p-Phenylenrest und Reste der Formel

$$\text{-X-Alkylen-X'-},$$

worin Alkylen bevorzugt 2 bis 18 C-Atome aufweist, X und X' gleiche oder verschiedene verbindende Gruppen, z.B. -O-, -CONH-, -COO-, -NHCOO- oder -NH-CO-NH- sind. D kann z.B. ein Benzolring wie im Divinylbenzol sein, der gegebenenfalls auch substituiert sein kann wie p-Methyldivinylbenzol oder o-Nonyl-divinylbenzol. Weitere Beispiele für geeignete polyungesättigte Monomere sind Reaktionsprodukte aus Polyalkoholen, besonders Dialkoholen, mit α,ß-ungesättigten Carbonsäuren, wie sie schon definiert sind. Beispiele hierfür sind Ethandiol-diacrylat, Ethylenglykol-dimethylacrylat, 1,4-Butandiol-diacrylat, 1,6-Hexandiol-diacrylat. Neopentylglykol-dimethylacrylat, Triethylenglykol-dimethacrylat, Polyglykol-400-diacrylat, Glycerin-dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat, Methacrylsäure-β-isocyanato-ethylester oder Dimethyl-m-isopropenyl-toluylisocyanat mit Hydroxyethyl(meth)acrylat oder (Meth)acrylsäure. Beispiele für anders aufgebaute geeignete Verbindungen sind Allylmethacrylat, Diallylphthalat, Butandiolvinylether, Divinylethylenharnstoff, Divinylpropylenharnstoff, Maleinsäurediallylester, Bismaleinimide, Glyoxabisacrylamid und/oder das Reaktionsprodukt von Epoxidharz mit (Meth)acrylsäure oder Fumarsäurehalbestern. Bevorzugt wird der Einsatz von difunktionellen ungesättigten Monomeren wie Butandiol-diacrylat oder Hexandiol-diacrylat. Bei Verwendung von Glycidyl-methacrylat und Methacrylsäure entsteht das entsprechende Glycerindimethacrylat automatisch bei der Polymerisation. In gleicher Weise kann die Reaktion von eingebautem verethertem Alkoxy(meth) acrylamid mit Amid-, Carboxyl- oder Hydroxylgruppe ausgenutzt werden. Die Art und Menge an polyungesättigten Monomeren ist mit den Reaktionsbedingungen (Katalysatoren, Reaktionstemperatur, Lösemittel) sorgfältig abzustimmen, um die gewünschte hohe Viskosität ohne Gelierung zu erhalten.

Die Copolymerisation erfolgt in bekannter Weise bevorzugt durch Lösungspolymerisation unter Zusatz von radikalischen Initiatoren, sowie gegebenenfalls Reglern bei Temperaturen von z.B. 50 bis 160°C. Sie erfolgt in einer Flüssigkeit, in der sich Monomere und Polymere gemeinsam lösen. Der Gehalt an Monomeren bzw. Polymeren nach der Auspolymerisation beträgt dabei etwa 50 bis 90 Gew.-%. Es wird eine Lösungspolymerisation in organischen Lösemitteln bevorzugt, die mit Wasser verdünnbar sind und später im einzelnen beschrieben werden. Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs der Monomeren getrennt zudosiert. Als Katalysatoren, die in organischen Lösemitteln löslich sind, werden 0,1 bis 5 Gew.-%, bevorzugt 0,5 bis 3 Gew.-% bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctat oder tert.-Butylperbenzoat. Thermisch zerfallende Azo-Verbindungen sind beispielsweise 2,2'-Azo-bis-(2-cyanopropan) oder 1,1'-Azo-bis-cyclohexancarbonitril Als Initiatoren können auch radikalbildende Verbindungen vom Dibenzyltyp wie 1,2-Bis-(4-methylphenyl) 1,2-dicarbethoxy-1,2-dicyanoethan verwendet werden. Durch den Einsatz von Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n- oder tert.-Dodecylmercaptan, Tetrakis-mercaptoacetylpentaerythrit, tert.-Butyl-o-thiokresol, Buten-1-ol oder dimeres $\alpha$-Methylstyrol.

Die Herstellung von Amino-poly(meth)acrylatharzen der Komponente A) kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A 34 36 346 beschrieben. Hier werden zunächst epoxidgruppenhaltige monoethylenisch ungesättigte Monomere in das Copolymere einpolymerisiert. Danach wird mit überschüssigem Ammoniak, primären und/oder sekundären Monoaminen und/oder Monoaminoalkoholen umgesetzt und anschließend der Aminüberschuß abdestilliert. Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin. Epoxidgruppen enthaltende radikalisch polymerisierbare monoethylenisch ungesättigte Monomere sind Mono- und/oder Diglycidylverbindungen von $\alpha,\beta$-ungesättigten Säuren, Säureamiden, Alkoholen oder Aminen wie beispielsweise Glycidester der (Meth)acrylsäure, der Fumarsäure und/oder Maleinsäure, der Fumarsäure- und/oder Maleinsäuremonoalkylester, sowie Glycidylverbindungen von (Meth)acrylsäureamid, Fumarsäurediamid, Maleinsäurediamid oder Maleinimid und/oder Glycidether von ungesättigten Alkoholen wie Vinyl- und/oder Allylalkohol. Andere geeignete Verbindungen sind Monoglycidylester von Dicarbonsäuremonoestern mit ungesättigten Alkoholen wie Phthalsäure-allylglycidylester. Es können jedoch auch Vinyl- und Allylester von epoxydierten Fettsäuren eingesetzt werden wie 2,3-Epoxy-buttersäureallylester oder Epoxy-stearinsäureallylester. Außerdem eignen sich auch Diolefine, deren eine Doppelbindung epoxidiert worden ist, wie Vinyl-ethylenoxid, 1-Methyl-1-vinyl-ethylenoxid oder 3, 4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenreaktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

$$R-NH-R'$$

wobei

R = -H oder -R'

R' = $-C_nH_{2n+1}$, $-C_nH_{2n}OH$ und/oder $-C_nH_{2n}-N = C(Alkyl)_2$ und

n = 1 bis 8, bevorzugt 1 bis 2 betragen, und Alkyl 1 bis 8 C-Atomen hat.

Folgende Amine können beispielsweise für die Reaktion eingesetzt werden: $C_1$ bis $C_6$-Dialkylamine mit gleichen oder verschiedenen Alkylgruppen im Molekül wie Dimethyl-, Diethyl-, Diisopropyl-, Dibutyl-, Methylethyl-, Methylpropyl-, Methylbutylamin, monocycloaliphatische Amine wie Morpholin, Piperidin, Pyrrolidin und/oder Monoalkanolamine wie N-Methylaminoethanol und/oder Dialkanolamine wie Diethanolamin, Diisopropanolamin. Beispiele für primäre Amine oder Aminoalkohole sind $C_1$ bis $C_8$-Alkylamine wie Ethylamin, 2-Ethylhexylamin oder Aminoethanol. In jedem Fall sind $C_1$ bis $C_4$-Alkylgruppen, insbesondere $C_1$- und/oder $C_2$-

Alkylgruppen bevorzugt. Besonders bevorzugt sind sekundäre Amine wie Dimethylamin, Diethylamin, Methylethylamin oder N-Methyl-aminoethanol, weil damit nach Neutralisation gut lösliche Lacke mit hohem pH-Wert erhalten werden können. Die oben erwähnten primären Amine werden meistens im Gemisch mit sekundären Aminen eingesetzt, weil sonst zu hochviskose Produkte entstehen. Die Zahl der primären und/oder sekundären Hydroxylgruppen wird so optimiert, daß beim Einbrennen des Lacks ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebracht, mindestens eine weitere Hydroxylgruppe pro Molekül, bevorzugt primäre Hydroxylgruppe über andere ungesättigte Monomere einzupolymerisieren. Die Zahl der Epoxidgruppen bestimmt die Zahl der damit zur Umsetzung kommenden Aminogruppen und damit auch die Löslichkeit des Produktes. Es soll mindestens eine Epoxidgruppe pro Molekül vorhanden sein. Oft ist es vorteilhaft, eine erhöhte Hydroxylzahl mit einer niedrigen Aminzahl und umgekehrt zu kombinieren. Das Entwicklungsziel ist im allgemeinen ein gut lösliches Produkt bei niedrigem Neutralisationsgrad und möglichst hohem pH-Wert.

In einem anderen bevorzugten Verfahren gelingt der Einbau von Aminogruppen durch Umsetzung eines hydroxylgruppenhaltigen Poly(meth)acrylatharzes mit isocyanatgruppenhaltigen Aminoverbindungen. Diese werden beispielsweise hergestellt durch Reaktion von 1 Mol Diisocyanat mit 1 Mol Dialkylaminoalkanol.

Um den in den Lack eingeschleppten hohen Lösemittelanteil zu reduzieren, kann das alkoholische Lösemittel des Lösungspolymerisats gegebenenfalls unter Vakuum bei erhöhten Temperaturen abdestilliert und anschließend eine Emulsion mit Säure und Wasser hergestellt werden. Ein anderes bevorzugtes Verfahren ist die Lösungspolymerisation in nichtwasserlöslichen Lösemitteln. Dieser Harztyp wird nach Neutralisieren mit Säure in Wasser emulgiert und daran anschließend das Lösemittel mit Wasser azeotrop ausgekreist. Sollen ohne Viskositätsschwierigkeiten höhere Molmassen erhalten werden, dann ist es notwendig eine Emulsionspolymerisation durchzuführen.

Eine andere bevorzugte Gruppe von basischen Bindemitteln (der Komponente A)) für Basecoats wird bevorzugt aus Polyestern hergestellt, wobei die Aminogruppen als Aminoalkohole entweder direkt in den Polyester einkondensiert werden oder schonender mit Hilfe einer Polyaddition in die Polymerkette eingebaut oder an die Polymerkette angehängt werden. So wird beispielsweise ein bevorzugt linearer OH-gruppenhaltiger Polyester aufgebaut durch Umsetzung des Polyesters mit Dialkylaminodialkoholen und Diisocyanaten. Arbeitet man mit einem Isocyanatunterschuß, so muß das Harz nach Neutralisation mit Säuren direkt in Wasser dispergierbar sein. Arbeitet man dagegen mit einem Isocyanatüberschuß, so kann man das entstehende NCO-Prepolymer in Wasser dispergieren und durch Kettenverlängerung mit einem Polyamin zu einer Polyurethan(harnstoff)dispersion verwandeln.

Die Herstellung von basische Gruppen enthaltenden Polyurethan(harnstoff)Dispersionen erfolgt in bekannter Weise z.B. durch Kettenverlängerung eines kationischen Prepolymeren mit endständiger Isocyanatgruppe mit Polyolen, Polyaminen und/oder Hydrazin-Verbindungen, wobei die Kettenverlängerung vor oder nach Neutralisation der tert.-Aminogruppen mit diesen in Wasser erfolgt. Die Aminzahl wird durch die bei der Herstellung eingesetzte Menge an kationengruppenhaltigen Verbindungen im isocyanatgruppenhaltigem Prepolymer gesteuert. Die Teilchengröße ist abhängig von der Molmasse des eingesetzten Polyols, z.B. OH-Polyesters (Polyesterpolyols), der Aminzahl und der Aufbausequenz. Die zahlenmittlere Molmasse liegt bevorzugt zwischen 3000 und 500000, besonders bevorzugt über 5000 und unter 50000. Es werden bevorzugt harnstoffgruppenhaltige Polyurethan-Dispersionen hergestellt, die mindestens 2, bevorzugt 4 Urethangruppen und mindestens eine tert.-Aminogruppe, speziell Dialkylamin-Gruppe im NCO-Prepolymer enthalten.

Die Herstellung der zum Einsatz in Polyurethanharnstoffdispersionen geeigneten kationischen isocyanatgruppenhaltigen Prepolymeren erfolgt z.B. durch gleichzeitige Umsetzung eines Polyolgemisches mit Diisocyanaten in einem bevorzugten Verhältnis von NCO- zu OH-Gruppen von über 1,00 bis 1,4. Das Polyolgemisch besteht bevorzugt aus einem oder mehreren gesättigten OH-Polyestern, gegebenenfalls unter Zusatz von einem oder mehreren niedrigmolekularen Diolen und einer Verbindung mit zwei gegenüber Isocyanat-Gruppen H-reaktiven Gruppen, die zusätzlich eine zur Kationenbildung befähigte Gruppe enthalten. Die Reaktion erfolgt bei Temperaturen von 20 bis 150°C, bevorzugt von 45 bis 90°C, gegebenenfalls unter Zusatz von Katalysatoren. Die Polyaddition wird nach raschem Mischen unter gutem Rühren in der Schmelze oder nach Verdünnen mit trocknen Lösemitteln, die nicht mit der Isocyanatgruppe reagieren, durchgeführt. Sie läuft solange, bis praktisch alle Hydroxylgruppen umgesetzt sind. Andererseits kann die Reaktion auch in sequentierter Reihenfolge stufenweise vorgenommen werden. Beispielsweise erfolgt erst die Reaktion des OH-Polyesters mit dem Diisocyanat unter Ausbildung von Weichsegmenten. Danach wird die restliche Isocyanatmenge mit der Kationengruppen enthaltenden Verbindung und gegebenenfalls niedrigmolekularen Dialkanolen unter Zusatz von weiterem Isocyanat zu einem Hartsegment umgesetzt, wobei Dialkanol und Diisocyanat nicht identisch mit dem in der ersten Stufe eingesetzten zu sein brauchen.

Die Herstellung des Polyesterpolyols kann auf verschiedene Weise erfolgen, beispielsweise in der Schmelze oder durch azeotrope Kondensation bei Temperaturen von z.B. 160 bis 260ºC, bevorzugt aus Dicar-

bonsäure und Dialkoholen, die gegebenenfalls geringfügig durch kleine Mengen an Trialkoholen modifiziert sein können. Die Reaktion wird, gegebenenfalls unter Zusatz von Katalysatoren, wie Zinnoctoat oder Dibutylzinnoxid, solange durchgeführt, bis praktisch alle Carboxylgruppen (Säurezahl≦1) umgesetzt sind. Die notwendige OH-Zahl von 35 bis 200, bevorzugt über 50 und unter 150, bzw. Molmasse von 500 bis 5000, bevorzugt über 800 und unter 3000, wird durch den verwendeten Alkoholüberschuß festgelegt. Zur Bestimmung der theoretischen Molmasse genügt die Bestimmung der OH-Zahl unter Berücksichtigung der Funktionalität von 2 bei linearem Aufbau. Die zahlenmittlere Molmasse wird dann errechnet nach der Formel

$$\overline{M}n = \frac{56100}{\text{OH-Zahl}} \times 2.$$

Die bevorzugt eingesetzten Dicarbonsäuren sind linear oder verzweigt aliphatisch, alicyclisch oder aromatisch aufgebaut. Die beiden Carboxylgruppen sind bevorzugt so angeordnet, daß sie kein innermolekulares Anhydrid bilden können, d.h. die beiden Carboxylgruppen sind z.B. durch eine Kohlenstoffkette mit 3 bis 14 C-Atomen, bevorzugt 4 bis 8, voneinander getrennt. Beispiele hierfür sind Adipinsäure, 2.2.4-Trimethyladipinsäure, Azelainsäure, Sebacinsäure, 1,3- und 1,4-Cyclohexandicarbonsäure, 1,4- oder 1,3-Di- oder Tetrahydrophthalsäure, Isophthalsäure, mit Alkylgruppen substituierte Isophthalsäuren und/oder Terephthalsäure. Die Dialkanole sind ebenfalls linear oder verzweigt aliphatisch, oder cyclisch aufgebaut. Ihre beiden OH-Gruppen werden ebenfalls z.B. durch eine Kohlenstoffkette mit 3 bis 14, bevorzugt 4 bis 8, C-Atomen voneinander getrennt. Für besonders hydrolysebeständige Polyester werden Diole mit sterisch gehinderten primären OH-Gruppen oder mit sekundären Hydroxylgruppen verwendet. Beispiele hierfür sind Butandiol-1.4, Hexandiol-1.6, Hexandiol-2.5, Cyclohexandiol-1.4, 2-Ethylhexandiol-1.3, 2.2.4-Trimethylpentandiol-1.3, Hydroxypivalinsäureneopentylglykolester, Cyclohexandimethanol, 2.2-Dimethyl-1.3-propandiol, 1.1-Isopropyliden-bis-(p-phenoxy)-1-ethanol, 2.2-Bis-(hydroxymethyl)-1-butanol, 1.3-Di-(hydroxyethyl)-5,5-dimethylhydantoin, sowie die hydrierten Bisphenole A oder F. Die Dialkohole können geringe Anteile an höheren Polyolen, wie beispielsweise Glycerin oder Trimethylolpropan enthalten, um eine Verzweigung einzuführen. Die Menge sollte jedoch so klein sein, daß keine vernetzten Produkte entstehen. Es wird ein linearer aliphatischer Aufbau bevorzugt, der gegebenenfalls anteilweise eine aromatische Dicarbonsäure enthalten kann und am Molekülende bevorzugt eine OH-Gruppe enthält.

Als Polyesterpolyole können erfindungsgemäß auch Polyesterdiole eingesetzt werden, die durch Kondensation von Hydroxycarbonsäuren erhalten werden. Sie zeichnen sich durch die wiederkehrenden Polyesteranteile der Formel

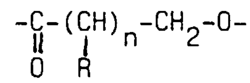

aus, wobei n = 3 bis 18, bevorzugt 4 bis 6 und der Substituent R Wasserstoff, ein Alkyl-, Cycloalkyl- und/oder Alkoxyrest ist. Kein Substituent enthält mehr als 12 Kohlenstoffatome. Die Grundbausteine sind Hydroxycarbonsäure, Hydroxybuttersäure, Hydroxydecansäure und/oder Hydroxystearinsäure.

Das als Ausgangsmaterial verwendete Lacton kann durch folgende allgemeine Formel dargestellt werden

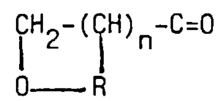

in der n und R die bereits angegebene Bedeutung haben. Für die Herstellung von Polyesterdiolen sind unsubstituierte ε-Caprolactone mit n = 4 und R = H bevorzugt, die mit niedermolekularen Polyolen gestartet werden. Unter OH-gruppenhaltigen Polyestern werden auch OH-funktionelle Kohlensäureester verstanden, die beispielsweise durch Umsetzung von Kohlensäurediethyl-, und/oder -diphenylester mit Glykolen oder Dialkanolen, wie 1.6-Hexandiol hergestellt werden können.

Um die Molekularverteilung und die Anzahl der eingebauten Urethangruppen zu beeinflussen, können 2 bis 30 Gew.-% des höhermolekularen Polyesters gegen niedrigmolekulare Glykole oder Dialkanole ausgetauscht werden. Es werden hierfür bevorzugt die schon beim Polyester verwendeten Dialkanole mit einer Molmasse von 60 bis etwa 350 eingesetzt. Die dabei eingesetzten Dialkanole brauchen nicht identisch mit den im Polyester verwendeten zu sein.

Um das Polyesterurethanharz in Wasser lösen zu können, wird ein Teil der niedermolekularen Diole durch solche Diole ersetzt, die noch mindestens eine Oniumsalzgruppe oder eine durch Säure neutralisierbare Aminogruppe enthalten. Geeignete basische Gruppen, die zur Kationenbildung befähigt sind, sind primäre, sekundäre und tertiäre Aminogruppen und/oder Oniumgruppen, wie quaternäre Aminogruppen, quaternäre Phosphoniumgruppen und/oder tertiäre Sulfoniumgruppen. Bevorzugt werden Dialkylamino-Gruppen verwendet. Sie sollen so reaktionsträge sein, daß die Isocyanatgruppen des Diisocyanats vorzugsweise mit den Hydroxylgruppen des Moleküls reagieren.

Bevorzugt werden aliphatische Diole, wie N-Alkyl-dialkanolamine, wobei als Alkyl-, bzw. Alkanrest aliphatische oder cycloaliphatische Reste mit 1 bis 10 Kohlenstoffatomen verwendet werden. Die Alkylgruppe kann z.B. eine Methyl-, Ethyl-, Butyl- oder Cyclohexylgruppe sein. Der Alkanolrest besteht z.B. aus Ethanol,

Isopropanol, Butanol oder Cyclohexanol. Geeignete Beispiele sind N-Methyldiethanolamin, N-Methyl-diisopropanolamin oder 1,2-Propandiol-3-dimethylamin. Die Dialkylaminogruppe kann jedoch auch in der Seitenkette des Diols angeordnet sein wie beispielsweise in 2-Diethylamino-1.2-propandiol oder 2-(Dimethylaminomethyl)-2-ethyl-1.3-propandiol. Beim Einsatz von tertiären Aminen mit mehr als zwei Hydroxylgruppen wie Triethanolamin oder Triisopropanolamin wird vorzugsweise ein größerer Anteil an N-Alkyl-dialkanolamin eingesetzt, um Gelierungen zu vermeiden.

Bis zu 97 Gew.% des gesamten Polyolgemisches können aus OH-gruppenhaltigen Polyethern oder Polyestern, bevorzugt gesättigtem OH-Polyester der Molmasse 400 bis 5000, bevorzugt über 600 und unter 3000 bestehen. Bis zu 30 Gew.-% der gesamten Polyolmenge einschließich der durch Kationengruppen modifizierten Dialkanole, bevorzugt über 2 und unter 20 Gew.% sind niedrigmolekulare Dialkanole mit einer Molmasse von 60 bis zu etwa 350. Die durch die Neutralisation verfügbare Menge an Salzen beträgt im allgemeinen wenigstens 0,4 Gew.-% bis etwa 6 Gew.-%, bezogen auf Feststoff. Das Isocyanat-Prepolymer enthält 0,2 bis 15 Gew.-% Isocyanatgruppen, bezogen auf den Festkörper. Die Menge an trockenem organischen Lösemittel, das nicht mit Isocyanat reagieren darf, kann in weiten Grenzen variieren und sollte zur Bildung einer Prepolymer-Lösung mit geeigneter Viskosität ausreichen. Sieden die gegebenenfalls nicht wasserlöslichen Lösemittel niedriger als das Wasser, so können sie nach Herstellung der Polyurethan-(harnstoff)Dispersion durch Vakuum-Destillation oder Dünnschicht-Verdampfung schonend abdestilliert werden. Besonders bevorzugt werden als Lösemittel N-Methylpyrrolidon und/oder Ketone, wie Methylethylketon, Methylisopropylketon und Aceton, und/oder Ester, wie Essigsäuremethyl- oder -ethylester.

Die kationischen Gruppen des für die Herstellung der Polyurethandispersion eingesetzten NCO-Prepolymeren werden mit einer Säure mindestens teilweise neutralisiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan stabil zu dispergieren. Geeignete Säuren sind organische Monocarbonsäure. Das NCO-Prepolymer wird nach der Neutralisation mit Wasser verdünnt und ergibt dann eine feinteilige Dispersion mit einem mittleren Teilchendurchmesser von 25 bis 500 nm. Kurz danach können die noch vorhandenen Isocyanatgruppen mit Di- und/oder Polyaminen mit primären und/oder sekundären Aminogruppen, sowie Hydrazin und seinen Derivaten oder Dihydraziden als Kettenverlängerer umgesetzt werden. Diese Reaktion führt zu einer weiteren Verknüpfung und Erhöhung der Molmasse. Die Konkurrenzreaktion zwischen Amin und Wasser mit dem Isocyanat wird, um optimale Eigenschaften zu erhalten, gut abgestimmt (Zeit, Temperatur, Konzentration) und für eine reproduzierbare Produktion gut überwacht. Als Kettenverlängerer werden organische Diamine bevorzugt, weil sie in der Regel die höchste Molmasse aufbauen, ohne das Harz zu gelieren. Dies ist durch geeignete Wahl des Verhältnisses der Aminogruppen zu den Isocyanatgruppen möglich. Die Menge des Kettenverlängerers wird von seiner Funktionalität, vom NCO-Gehalt des Prepolymeren und von der Dauer der Reaktion bestimmt. Das Verhältnis der reaktiven Aminogruppe im Kettenverlängerer zu den NCO-Gruppen im Prepolymeren sollte in der Regel geringer sein als 1 : 1 und vorzugsweise im Bereich von 1 : 1 bis 0,75 : 1 liegen.

Polyamine sind im wesentlichen Alkylen-Polyamine mit 1 bis 15 Kohlenstoffatomen. Sie können Substituenten tragen, die keine mit Isocyanat-Gruppen reaktiven Wasserstoffatome haben. Beispiele sind Polyamine mit linearer oder verzweigter aliphatischer, cycloaliphatischer und/oder (alkyl)aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, Hexamethylendiamin-1.6, Trimethyl-hexamethylendiamin, Menthandiamin, Isophorondiamin, 1.3-oder 1.4-Bis-(aminomethyl)cyclohexan, 1-Methyl-2.4-diaminocyclohexan, 2-Methyl-1.6-hexandiamin, 4.4-Diaminodicyclohexylmethan und Aminoethylethanolamin. Bevorzugte Diamine sind Ethylendiamin, Propylendiamin und 1-Amino-3-aminomethyl-3.3.5-trimethylcyclohexan oder Gemische davon. Die Kettenverlängerung kann wenigstens teilweise mit einem Polyamin erfolgen, das mindestens drei Aminogruppen mit reaktionsfähigem Wasserstoff aufweist, wie beispielsweise Diethylentriamin. Als Kettenverlängerer können auch Diamine verwendet werden, deren primäre Aminogruppen als Ketimin geschützt sind und die nach Emulgieren in Wasser durch die hydrolytische Abspaltung des Ketons reaktiv werden. Neben dem Hydrazin werden die Ketten auch mit substituierten Hydraziden, wie Monoalkyl- oder -arylhydrazid oder Bishydraziden wie beispielsweise Adipinsäure-bis-hydrazid verlängert.

In einer anderen bevorzugten Arbeitsweise wird die Polyaddition unter starkem Verdünnen mit trokkenen, nicht-isocyanatreaktiven Lösemitteln durchgeführt. Die Kettenverlängerung erfolgt dabei mit Polyolen, Polyaminen oder Aminoalkoholen. Als Lösemittel dienen niedrigsiedende wasserfreie Ketone wie Aceton, Methylethylketon oder Methylisopropylketon, aber auch Ester wie Acetessigester. Nach Neutralisation mit Säuren und Verdünnen mit Wasser muß dann gegebenenfalls unter Vakuum das leichtflüchtige Lösemittel unter Erwärmen abdestilliert werden. Nach diesem Verfahren muß gearbeitet werden, wenn die basische Gruppe eine primäre Aminogruppe ist, die durch Reaktion mit Ketonen oder Aldehyden zu entsprechenden Schiffschen Basen geschützt werden muß.

Als typische Diisocyanate zur Umsetzung mit dem Polyol-/Diol-Gemisch werden beispielsweise solche auf der Basis von linearen oder verzweigten aliphatischen, cycloaliphatischen und/oder aromatischen Kohlanwasserstoffen mit einem NCO-Gehalt von 20 bis 50 % verwendet. Sie enthalten als funktionelle Gruppen zwei Isocyanatgruppen, die im Molekül asymmetrisch oder symmetrisch angeordnet sind. Sie können aliphatisch, alicyclisch, arylaliphatisch oder aromatisch sein. Ihr Aufbau kann beispielsweise nach dem gewünschten Anwendungszweck des zu pigmentierenden Überzugsmittels gewählt werden. Beispielsweise kann man für den späteren Einsatz in Grundierungen oder Primer die Isomere oder Isomerengemische von organischen Diisocyanaten vom Toluylendiisocyanat verwenden. Andere Beispiele sind 1.4-Bis(isocyanat)benzol, 2.4-Bis-(isocyanat)toluol, Bis-(isocyanat)isododecylbenzol, Bis-(2-isocyanat-phenyl)methan, 1.5-Bis-(isocyanat) naphthalin, 4.4'-Bis-(isocyanat)-3.3'-dimethylbiphenyl. Für Decklacksysteme werden beispielsweise aufgrund ihrer guten Beständigkeit gegenüber ultraviolettem Licht bevorzugt Diisocyanate eingesetzt, bei denen die Isocyanatgruppe nicht an ein aromatisches C-Atom gebunden ist. Beispiele für verwendbare aliphatische Diisocyanate sind solche der allgemeinen Formel

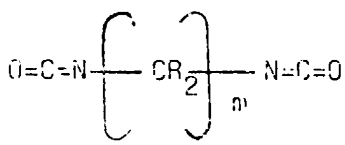

worin m eine ganze Zahl von 2 bis 20, insbesondere 5 bis 8 ist und R, das gleich oder verschieden sein kann, Wasserstoff oder einen niedrigen Alkylrest mit 1 bis 8 C-Atomen, vorzugsweise eine Methylgruppe darstellt. Besonders bevorzugt werden die unter diese Formel fallenden Diisocyanate, deren NCO-Gruppen über eine $CH_2$-Gruppe an einen linearen, verzweigten oder cycloaliphatischen, speziell unverzweigten linearen aliphatischen Rest gebunden sind. Beispiele hierfür sind Propylendiisocyanat, Ethylethylendiisocyanat, Dimethylethylendiisocyanat, Methyltrimethylendiisocyanat, Trimethylhexandiisocyanat, 1,12-Dodecandiisocyanat, 1.6-Bis-(isocyanat)pentan, 1.6-Bis-(isocyanat)hexan, 1.6-Bis-(isocyanat)-2.2.4-trimethylhexan, 1.4-Bis-(2-isocyanatethyl)cyclohexan oder 1.3-Bis-(2-isocyanatmethyl)cyclohexan. Beispiele für geeignete cycloaliphatische Diisocyanate sind Cyclopentylendiisocyanat, 1.4-Bis-(isocyanat)cyclohexan, Bis-(4-isocyanat-cyclohexyl)methan, 5-Isocyanat-3-(isocyanatmethyl)-1.1.3-trimethylcyclohexan oder Menthandiisocyanat. Als arylaliphatische Diisocyanate können verwendet werden beispielsweise 1.3-Bis-(1-isocyanatmethyl)benzol, 1.4-Bis-(1-isocyanat-1-methylethyl)benzol oder m-Tetramethyl-xylylendiisocyanat. Besonders bevorzugt sind Polyesterurethanharze auf Basis von 5-Isocyanat-3-(isocyanatmethyl)-1.1.3-trimethylcyclohexan (= Desmodur W ®) als Gemisch verschiedene sterischer Konfiguration. Die Synthese erfolgt durch gemeinsame Reaktion der Reaktanten im Gemisch oder stufenweise zu einem sequentierten Aufbau.

Polyisocyanate mit mehr als 2 Isocyanatgruppen werden durch Umsetzung mit isocyanatreaktiven monofunktionellen Verbindungen defunktionalisiert. Bevorzugt werden hierbei Verbindungen, die eine basische Aminogruppe nach der Umsetzung behalten, um auf diese Weise eine salzbildende Gruppe einzuführen. Polyisocyanate entstehen aus Diisocyanaten durch Trimerisierung, Umsetzung mit Wasser oder anteilweise Reaktion mit tri- und höherfunktionellen Polyolen. Beispiele hierfür sind das Biuret aus Hexamethylendiisocyanat und Wasser, das Isocyanurat des Hexamethylendiisocyanats oder Isophorondiisocyanats oder das Addukt von 3 Molen Isophorondiisocyanat oder m-Tetramethyl-xylylendiisocyanat an 1 Mol Trimethylolpropan. Durch Reaktion mit Dialkylaminoalkanolen oder Dialkylaminoalkylaminen werden unter schonenden Reaktionsbedingungen basische "Diisocyanate" hergestellt, wobei die Alkylgruppen linear oder verzweigt, aliphatisch oder cycloaliphatisch mit C-Ketten von 1 bis 10 Kohlenstoffatomen aufgebaut sind. Beispiele hierfür sind Dimethylaminopropylamin, Diethylaminoethylamin, Diethylaminoethanol oder Dimethylaminoisopropanol. Brauchbare Aminoalkohole können auch durch Michael-Addition von Hydroxyalkyl(meth)acrylaten oder Hydroxyalkyl(meth)acrylamiden mit sekundären Aminen hergestellt werden.

Die beschriebenen basischen Basisharz-Bindemittel (Komponente A)) können entweder einzeln oder im Gemisch bei einem beliebigen Mischungsverhältnis, bevorzugt von 95 : 5 bis 5 : 95, bezogen auf das Gewicht, eingesetzt werden. In einer speziellen Ausführungsform können die Monomeren im Schoße des basischen Polyesterpolyurethans oder Polyurethanharnstoffes polymerisiert werden und zwar sowohl in Lösung wie auch in Dispersionsform. In einem anderen Verfahren kann man die Herstellung des Polyurethanharzes in dem ungesättigten Monomeren "als Lösemittel" durchführen, die Harzlösung dispergieren und gegebenenfalls mit Polyaminen kettenverlängern und danach erst die Monomeren polymerisieren.

Zur besseren Abstimmung der anwendungstechnischen Eigenschaften, wie Spritzverhalten oder Anlöseresistenz gegenüber dem Klarlack, können bis zu 30 Gew.% Amin-Formaldehyd-Kondensationsharze und/oder blockierte Polyisocyanate (Komponente B)), die gegebenenfalls auch Aminogruppen enthalten, zugemischt werden. Bevorzugte Mengen sind 2 bis 25 Gew.%, bezogen auf den Festkörper der Bindemittel A) und B). Die Komponenten A) und B) können gegebenenfalls miteinander kalt vermischt oder auch bei erhöhter Temperatur prekondensiert werden. Dabei können die Komponenten A) und B) in gewissem Umfang miteinander reagieren, ohne daß das Gemisch die Eigenschaft verliert durch Neutralisation wasserverdünnbar zu werden.

Bei der Herstellung des Lacks können Härtungskatalysatoren zugesetzt werden um eine Reaktion zwischen Basislack (Komponente A)) und Vernetzungsmittel (Komponente B)) zu beschleunigen. Beim Einsatz von Amin-Formaldehyd-Harzen werden beispielsweise als Katalysatoren die Aminsalze oder leicht hydrolysierbare Ester von organischen Sulfonsäuren oder Sulfonamide eingesetzt, wie sie als handelsübliche Produkte erhältlich sind. Bei Kombination mit blockierten Polyisocyanaten müssen metallorganische Katalysatoren, wie Dibutylzinndilaurat, gegebenenfalls in Kombination mit basischen Katalysatoren, wie 1.4-Diazabicyclo[2.2.2] octan, verwendet werden.

Die Überzugsmittel können als Pigmentanreibungsmittel und zur Verbesserung der Anlöseeigenschaften bevorzugt Amin-Formaldehyd-Kondensationsharze enthalten. Sie sind entweder wasserlöslich oder können durch Zusatz organischer Lösemittel wasserverdünnbar gemacht werden. Sie entstehen beispielsweise durch Reaktion von Aldehyden mit Harnstoff, N-Alkylharnstoff, Dicyandiamid, Glykoluril an verschiedenen Triazinen wie Melamin, Benzoguanamin oder Acetoguanamin oder ihren Mischungen und anschließend bevorzugt vollständige Veretherung mit niedrigmolekularen Monoalkoholen. Je nach Reaktionsbedingungen (pH-Wert, Temperatur) und Methylolierungsgrad werden Harze mit verschiedenen Molmassen und unterschiedlicher Reaktivität erhalten. Als Aldehyde werden vorzugsweise Formaldehyd in wässriger und/oder alkoholischer Form als Halbacetat verwendet. Paraformaldehyd wird beispielsweise in Gegenwart verdünnter Säuren oder Basen in warmen Wasser oder Alkoholen hydrolysiert, bzw. depolymerisiert. Es ist jedoch der Einsatz anderer Aldehyde wie Glyoxal, Acetaldehyd, Isobutyroaldehyd oder Furfurol möglich. Im allgemeinen wird die Methylolierung bevorzugt mit Formaldehyd unter Zusatz schwacher Basen durchgeführt. Es werden vorteilhaft 3 bis 6 Methylolgruppen pro Molekül Melamin umgesetzt. Derartige bevorzugte Melamin-Formaldehyd-Harze enthalten vorzugsweise 1 - 10 verknüpfte Melaminreste mit folgenden funktionellen Gruppen

Methoxymethylimino:

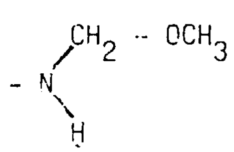

Methoxymethyl-methylolamino:

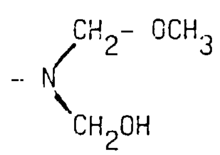

Di(methoxymethyl)amino:

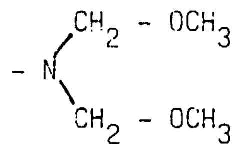

Die Methylolgruppen der Aldehyd-Kondensationsprodukte werden bevorzugt vollständig mit Monoalkoholen unter saurer Katalyse umgesetzt. Besonders bevorzugt werden Methanol, Ethanol, Propanol, Butanol, Heptanol, Benzylalkohol, cyclische Alkohole, sowie Ethoxyethanol oder Butoxyethanol. Sollen Alkohole mit mehr als 4 Kohlenstoffatomen eingebaut werden, so wird die Methylolgruppe erst mit einem niedrigen Alkohol verethert und anschließend der höhere Alkohol durch Umetherung eingeführt. Die bevorzugten Alkohole sind Methanol und Butanol und seine Isomeren. Besonders bevorzugt sind Melaminharze, die mit 3 bis 6 Molen Formaldehyd umgesetzt und anschließend vollständig mit Methanol oder Methanol und (iso)-Butanol verethert sind. Die Harze werden nach dem Stand der Technik hergestellt und von vielen Firmen als Verkaufsprodukte angeboten. Bei Veretherung mit ungesättigten Alkoholen, wie z.B. Hydroxyalkyl(meth)acrylaten oder Allylalkohol entstehen ungesättigte Melaminharze. Es können auch carbamylmethylierte Melaminharze eingesetzt werden, die durch Reaktion von alkoxymethylierten Melaminharzen mit Alkylcarbamaten unter schwach-sauren Bedingungen hergestellt werden.

In der Komponente B) werden z.B. auch die schon früher beschriebenen Di- und Polyisocyanate verwendet, wobei die reaktiven Isocyanatgruppen durch Schutzgruppen blockiert sind. Es werden hierfür bevorzugt drei- und höherwertige, z.B. drei- bis fünfwertige, besonders bevorzugt dreiwertige aromatische und/ oder aliphatische blockierte Polyisocyanate mit einer zahlenmittleren Molmasse $\overline{M}$n von 500 bis 1500 verwendet. Als Polyisocyanate haben sich besonders gut die sogenannten "Lackpolyisocyanate" geeignet, die aus den vorstehend schon beschriebenen aliphatischen Diisocyanaten hergestellt werden. Eine andere Gruppe von polyfunktionellen Isocyanaten sind Oxadiazintrionalkyldiisocyanate, die an Trimethylolpropan addiert werden können. Höherfunktionelle Polyisocyanate lassen sich auch durch Reaktion von 2 Mol Triisocyanaten mit H-aktiven di-funktionellen Verbindungen, wie Dialkoholen, Diaminen oder Aminoalkoholen wie Ethanolaminen oder N-Methyldiethanolaminen, herstellen.

Die freien Isocyanatgruppen werden gemeinsam oder einzeln verkappt (blockiert), damit sie bei Raumtemperatur gegen Wasser oder den aktiven Wasserstoffatomen des Basisharzes (Hydroxyl- oder Amin-Wasserstoff-Gruppen) geschützt sind. Als Blockierungsmittel geeignet sind monofunktionelle, aciden Wasserstoff enthaltende Verbindungen mit nur einer einzigen Amin-, Amid, Imid-, Lactam-, Thio- oder Hydroxylgruppe. Im allgemeinen werden flüchtige, aktiven

Wasserstoff enthaltende Verbindungen mit niedrigen Molmassen, vorzugsweise von nicht mehr als 300, bevorzugt von nicht mehr als 200, verwendet. Sie werden zweckmäßig bei Temperaturen über 50°C, vorzugsweise zwischen 80 und 120°C mit den Isocyanatgruppen umgesetzt. Das Blockierungsmittel wird in solchen Mengen eingesetzt, daß auf ein NCO-Äquivalent ein Äquivalent Blockierungsmittel kommt, wobei gegebenenfalls übliche Katalysatoren wie basische Katalysatoren, beispielsweise tertiäre Amine oder geringe Mengen an Zinnsalzen wie Zinn(II)-octoat oder Dibutylzinndilaurat, mitverwendet werden können. Geeignete Blockierungsmittel sind beispielsweise sekundäre oder tertiäre, aliphatische oder cycloaliphatische Alkohole, wie Isopropanol, tert.-Butanol, 2-Ethylhexanol, Furfurol, Cyclohexanol oder Hydroxyalkylester, Dialkylaminoalkohole wie Dimethylaminoethanol, Oxime wie Formaldehydoxim, Acetaldehydoxim, Methylethylketonoxim, Cyclohexanonoxim, Trimethylcyclohexanonoxim, 2,2,6,6-Tetra-methyl-piperidon-(4)-oxim, Acetophenonoxim, Benzophenonoxim oder Diethylglyoxim, Lactame, wie ε-Caprolactam, δ-Valerolactam, 1-Butyrolactam, Pyrrolidon-2, Hydroxamsäuren bzw. deren Ester, wie Acethydroxamsäure, Benzydroxamsäure, Phenole, wie Phenol, Kresol, tert.-Butylphenol, Dimethylaminophenol, N-Alkylamide, wie Methyl-acetamid, Imidazole, wie 2-Methylimidazol, Imide wie Phthalimid oder N-Hydroxymaleinimid, sowie enolisierende Verbindungen wie Malonsäureester, Acetessigsäureester oder NH-funktionelle Enamine. Es werden aber auch ß-Hydroxyglykole oder -glykolether und Glykolamide empfohlen. Oxime und Lactame sind als Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Besonders bevorzugte Blockierungsmittel sind beim erfindungsgemäßen Verfahren Verbindungen der Formel

$$X—H \qquad (19)$$

in welcher X für

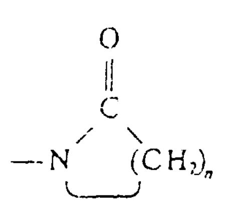

$n$ = 3-7

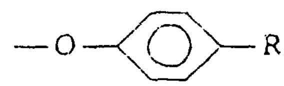

R : —H, —$CH_3$, —$C_9H_{19}$

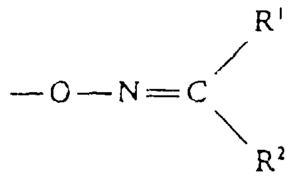

$R^1$: —H, —$C_nH_{2n+1}$
$R^2$ = —$R^1$ ($n$ = 2-5)

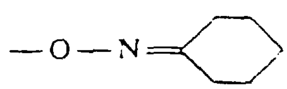

steht.

Bevorzugte Beispiele sind ε-Caprolactam, Methyl-ethyl-ketoxim und Butoxyethanol.

Zur Durchführung der Blockierungsreaktion wird im allgemeinen die Isocyanatkomponente vorgelegt und der Reaktionspartner zugegeben. Die Reaktion kann in Substanz oder auch in Gegenwart geeigneter (inerter) Lösemittel durchgeführt werden. Es können auch Gemische von einer oder mehreren Melaminharzen mit einer oder mehreren blockierten Polyisocyanaten eingesetzt werden. Der Einsatz von Melaminharzen wird bevorzugt.

Die Pigmente können in Komponente A) oder B) angerieben werden. Handelt es sich bei Komponente A) um eine sehr stark verdünnte wässrige Dispersion, so erfolgt die Pigmentanreibung bevorzugt mit Hilfe von wasserverdünnbaren Acrylat- oder Polyurethan-Netzharzen, die aufgrund ihrer Aminzahl, ihrem Neutralisationsgrad und ihrem höheren Gehalt an polaren Lösemitteln eine hohe Netzwirkung haben. Dabei werden etwa 1 bis 15 Gew.% des Basisharzes A gegen das Netzharz oder Pastenharz, bezogen auf den Festkörper, ausgetauscht. Es ist günstig den Gehalt an Pastenharz im Bindemittelgemisch so niedrig wie möglich zu halten. Diese Bindemittel enthalten bevorzugt einen Festkörper von 20 bis 50 Gew.%, weisen bevorzugt eine Viskosität von 0,5 bis 50 Pa.s bei 25°C auf und sind bevorzugt zu 70 bis 100 % mit Monocarbonsäuren neutralisiert. Beispiele hierfür sind basische Polyurethanharze, z.B. basische Polyesterurethanharze, bei deren Herstellung das Äquivalentverhältnis des eingesetzten Diisocyanats in Abstimmung mit den eingesetzten Polyolen und Diolen so gewählt wird, daß das fertiggestellte Polyurethanharz, beispielsweise Polyesterurethanharz, ein Zahlenmittel der Molmasse ($\overline{M}n$) von 3000 bis 200000, bevorzugt unter 50000, aufweist. Bevorzugt wird das Verhältnis der OH-Gruppen des Polyols, beispielsweise Polyesterpolyols und Diols, zu den NCO-Gruppen des Isocyanats über 1,0 bis 1,2 : 1 gehalten; die Viskosität des Polyurethanharzes, beispielsweise Polyesterurethanharzes, liegt bevorzugt bei 1 bis 30 Pa.s, besonders bevorzugt über 5 und unter 15 Pa.s, gemessen 60%ig in Butoxyethanol bei 25°C.

Als Pastenharze besonders geeignet sind solche, die in der Literatur beschrieben werden und Oniumsalz-Gruppen enthalten.

Oniumsalz-Gruppen enthaltende Harze sind solche, die beispielsweise quaternäre Ammoniumsalz-Gruppen, quaternäre Phosphoniumsalz-Gruppen und/oder ternäre Sulfoniumsalz-Gruppen enthalten. Sie können beispielsweise durch Reaktion von Epoxidharzen oder Verbindungen mit einer oder mehreren Epoxidgruppen mit tertiären Aminsalzen, Sulfid/Säuremischungen oder Phosphin/Säuremischungen hergestellt werden. Umgekehrt können aminogruppenhaltige Harze durch Umsetzung mit Monoepoxidverbindungen quaternisiert werden. Die Reaktionstemperatur ist nicht besonders kritisch und wird in Abhängigkeit von den Ausgangsstoffen und ihren Reaktionsgeschwindigkeiten gewählt. Häufig läuft die Reaktion bei Raumtemperatur oder bei bis zu 70°C erhöhten Temperaturen befriedigend schnell. In manchen Fällen ist es ratsam, höhere Temperaturen von etwa 110°C zu verwenden. Ein Lösemittel ist im allgemeinen nicht notwendig, obwohl es häufig zur besseren Steuerung der Reaktion eingesetzt wird. Beispiele von geeigneten Lösemitteln sind aromatische Kohlenwasserstoffe, Monoalkylether von Ethylenglykol oder Propylenglykol und aliphatische Alkohole. Als Säuren werden im allgemeinen solche verwendet, die entsprechende quaternäre Ammoniumsalze, Sulfoniumsalze oder Phosphoniumsalze bilden. Bevorzugt werden organische Säuren mit einer Dissoziationskonstanten von größer als etwa $10^{-5}$. Beispiele geeigneter Säuren sind Ameisensäure, Essigsäure, Propionsäure, Milchsäure, aber auch Borsäure oder Phosphorsäure. Für die Herstellung quaternärer Ammoniumsalze geeignete substituierte oder unsubstituierte Amine sind solche, die die Umsetzung des Aminsalzes mit dem Polyepoxid nicht stören und zu keiner Gelierung führen. Bevorzugte Amine sind tertiäre Trialkylamine wie Trimethylamin, Triethylamin, Triisopropylamin, Methyl-di-butylamin, Di-ethyl-butylamin oder auch Dimethylaminoethyl oder N-Methyl-diisopropanolamin.

Für die Herstellung von Harzen, die tertiäre Sulfoniumbasen enthalten, können beliebige Sulfide verwendet werden, die mit Epoxidgruppen reagieren und keine Gruppen enthalten, die die Umsetzung stören. Das Sulfid kann ein aliphatisches, gemischtes aliphatisch-aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie z.B. Diethanol-, Dipropanol- oder Dibutanolthioether. Das Polyepoxid kann auch mit Mercaptanen umgesetzt und anschließend das ternäre Sulfoniumsalz durch Reaktion mit 1,2-Epoxiden in Gegenwart von Säure gebildet werden.

Die Herstellung von Harzen mit quaternären Phosphonium-Salz-Gruppen erfolgt mit beliebigen Phosphinen, die keine störenden Gruppen enthalten. Beispiele solcher Phosphine sind aliphatische, aromatische oder alicyclische Phosphine, wobei als spezifische Beispiele folgende Phosphine genannt seien: niedrige Trialkylphosphine, wie Trimethylphosphin, Methyldiethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin und alicyclische Phosphine, wie Tetramethylenmethylphosphin.

Das Verhältnis von tert. Amin, Sulfid oder Phosphin zu Säure ist nicht besonders kritisch. Es wird bevorzugt mindestens ein Äquivalent Säure für jedes gewünschte Mol zur Umwandlung in ein Oniumsalz verwendet. Das Verhältnis zwischen Amin-Säuresalz, Sulfoniumsalz oder Phosphoniumsalz und der Epoxidverbindung kann schwanken. Die optimalen Mengen hängen von den spezifischen Ausgangsstoffen ab. Im allgemeinen können etwa 1 bis etwa 50 Gew. -Teile Salz auf etwa 100 Teile Polyepoxid verwendet werden. In manchen Fällen liegen weniger als 100 % des Stickstoffs in Form von quaternären Ammoniumsalzgruppen vor. Das ist zum Beispiel der Fall, wenn primäre und sekundäre Amine zur Herstellung der Harze mit quaternären Ammoniumsalzgruppen verwendet werden.

Polymerisatharze mit Oniumsalzgruppen können beispielsweise durch Einpolymerisieren von radikalisch polymerisierbaren ungesättigten Monomeren, die außer der reaktiven ungesättigten Doppelbindung noch eine quaternäre Ammoniumgruppe, eine tertiäre Sulfoniumgruppe oder quaternäre Phosphoniumsalzgruppe enthalten, hergestellt werden, wie beispielsweise das Reaktionsprodukt aus Glycidyl(meth)acrylat und Trialkylaminen in Gegenwart von Wasser oder Säure.

Als Pastenharze können bevorzugt auch Poly(meth)acrylatharze eingesetzt werden. Dies sind vorzugsweise solche, die als gut benetzbare Pastenbindemittel auf diesem Gebiet Verwendung finden. Sie werden beispielsweise in der DE-A 36 28 123 (entsprechend US-A-4 839 414) beschrieben und entstehen beispielsweise durch Umsetzung von

A. 80 bis 95 Gew.-% eines Copolymerisates aus

1. 0.5 bis 40 Gew.-% N,N-Dialkylaminoalkyl (meth)acrylamide und/oder N-substituierten

(Meth)acrylamiden und/oder (Meth)acrylamid, wobei das Verhältnis von Amino(meth)acrylat zu Amido(meth)acrylaten 1:2 bis 2:1 sein soll,

2. 10. bis 40 Gew.-% Hydroxyalkyl(meth)acrylaten,

3. 20 bis 89.5 Gew.-% anderer copolymerisierbarer $\alpha,\beta$-ungesättigter Verbindungen, und

B. 5 bis 20 Gew.-% eines unverkappte und gegebenenfalls auch verkappte Isocyanatgruppen aufweisenden Polyisocyanats, das zusätzlich Biuret-, Urethan- oder Isocyanurat-Gruppen enthält.

Die erfindungsgemäßen Bindemittel dienen zur Herstellung von farbigen Metalleffekten und Unifarbtönen. Hierzu werden transparente oder deckende Pigmente in üblicher Weise eingearbeitet, d.h. die Bindemittel werden entweder direkt pigmentiert oder durch Mischung von Pigmentpasten mit meist dispersionsartigen Komplettierungs-Bindemitteln hergestellt. Zur Farbgebung dienen transparente und deckende Pigmente wie sie in der deutschen Norm DIN 55 944 beschrieben sind. Als Pigmente eignen sich anorganische Pigmente, wie beispielsweise Titandioxid, Ruß, Eisenoxide und/oder organische Pigmente, wie beispielsweise Phthalocyanine, Chinacridone und/oder halogenierte Thioindigopigmente, sowie Füllstoffe, wie Bariumsulfat, Talkum oder Schichtsilikate. Als Dispergieraggregate eignen sich Rührscheibengeräte, Dreiwalzenstühle, Kugelmühlen oder beorzugt Sand- oder Perlmühlen. Die optimale Mahlgut-Zusammensetzung ergibt sich aus der geeigneten Kombination der Hauptbestandteile des Mahlgutes - Pigment, Bindemittel und Lösemittel (Wasser) - und wird für jeden Dispergieraggregat-Typ gesondert bestimmt. Es ist die Aufgabe des Dispergierprozesses Pigmentagglomerate soweit wie möglich wieder in Einzelteile zu zerlegen, um ihre volle Wirksamkeit in optischer Hinsicht entfalten zu können. Dabei muß mindestens soviel Bindemittel im Mahlgut vorhanden sein, wie zur vollständigen Benetzung des Pigmentes notwendig sind. Im allgemeinen ist es günstig so konzentriert wie möglich zu arbeiten, um so wenig Pastenharz wie möglich in eine spätere Lackrezeptur einzuschleppen. Der in Betracht kommende Viskositätsbereich wird so festgelegt, daß in möglichst kurzer Zeit eine vollständige Dispergierung erreicht wird. Die optimale Mahlgutzusammensetzung wird auf das jeweilige Pigment abgestimmt.

Um die Oberfläche der Pigmente einwandfrei zu benetzen, kann es günstig, aber nicht notwendig, sein, dem Mahlgut Dispergierhilfsmittel (Netzmittel) zuzusetzen, die von der Oberfläche der Pigmente adsorbiert werden und durch Herabsetzen der Grenzflächenspannung zwischen Pigment und Bindemittel den Benetzungsvorgang zusätzlich unterstützen. Als Netzmittel sind beispielsweise für diesen Zweck übliche geeignet. Metallische oder nichtmetallische Effektpigmente, wie Aluminium-Bronzen, Perlglanz- oder Interferenzpigmente werden in einem getrennten Arbeitsgang benetzt und dann in die angeriebene farbgebende, transparente Pigmentpaste eingerührt. Die Löslichkeit, bzw. Dispergierbarkeit in Wasser wird durch Salzbildung mit anorganischen Säuren wie Phosphorsäure oder sauren Phosphorsäureestern, Borsäure oder organischen Carbonsäuren wie Ameisensäure, Essigsäure, Propionsäure, Acrylsäure, aber auch Hydroxycarbonsäuren wie Milchsäure, Zitronensäure oder Dicarbonsäuren wie Malonsäure oder ihren Gemischen hergestellt. Dabei tritt je nach Lösungszustand gegebenenfalls ein starker Viskositätsanstieg auf. Es wird soviel Säure zugegeben, daß die Amingruppe zu 40 bis 110 % neutralisiert ist. Die untere Grenze ist durch die Stabilität der Dispersion bedingt. Der pH-Wert beträgt dabei für Unibasecoats 5 bis 8, für Metallic-Basecoats bevorzugt 6.5 bis 7.5. Das ist im allgemeinen der Fall, wenn pro Baseäquivalent der kationische Filmbildner weniger als 1 Säureäquivalent des Neutralisationsmittels verwendet wird.

Zur Steuerung des Löslichkeitsverhaltens und der Lagerstabilität werden dem Lack geringe Mengen organischer Lösemittel zugesetzt. Sie sind im allgemeinen wasserverdünnbar. Ihr Verdunstungsverhalten dient zur Beeinflussung der Oberflächenqualität. Solche Lösemittel sind beispielsweise Ethylenglykol, Ethoxyethanol, Butoxyethanol, Diethylenglykol, Triethylenglykol, Diethylenglykol-dimethylether, Propylenglykol, Methoxypropanol, Ethoxypropanol, Dipropylenglykolmonomethylether, Dipropylenglykol-dimethylether, Diacetonalkohol, Ethanol, Isopropanol, n-Butanol, sek.-Butanol, tert.-Butanol, Aceton, Methoxypropan, Dioxan, Tetrahydrofuran, N-Methylpyrrolidon oder ihre Gemische. Zur Verlaufsverbesserung kann auch anteilsweise ein nicht-wasserlösliches, hochsiedendes Lösemittel zugesetzt werden wie gesättigte Kohlenwasserstoffe, wie z.B. Benzinfraktionen, Hexylenglykol, Phenoxyethanol, Isodekanol oder 2.2.4-Trimethylpentandiol-1.3-monisobutyrat. Der Anteil an üblichen organischen Lösemitteln liegt möglichst niedrig. Er liegt beispielsweise unter 20, bevorzugt unter 10 Gew.% in dem fertigen Lack.

Zur Rheologiesteuerung können in den Lack assoziative oder mikrogelartige nichtionische oder ionische, bevorzugt kationische Verdickungsmittel eingearbeitet werden. Der Festkörper des Lackes liegt beim Unibasecoat etwa bei 30 bis 50 Gew. -%, bei Metallics bei etwa 15 bis 30 Gew.%. Das Pigment/Bindemittel-Verhältnis liegt für Unibasecoats bevorzugt bei 0,3 bis 1,2 : 1 und für Metallic-Basecoats bevorzugt bei 0,05 bis 0,5 : 1, jeweils bezogen auf das Gewicht. Der Basislack weist bevorzugt einen pseudoplastischen oder thixotropen Charakter auf, d.h. die scheinbare Viskosität der Dispersion ändert sich mit dem Scherungsgrad; und zwar ist sie insbesondere unter geringerer Scherung größer als unter starker Scherung. Die Viskositätsänderung bei Scherung und die Rückbildung der Viskosität bei anschließender Ruhe können zeitabhängig sein.

Die Härtung des Films kann nach dem Beschichten mit einem üblichen Klarlack erfolgen, wobei vorgetrocknet oder bevorzugt naß-in-naß gearbeitet werden kann. Bei Verwendung von Zweikomponenten-Klarlacken (z.B. Acryl-Isocyanat und/oder Polyester-Isocyanat) werden bereits bei geringen Härtungstemperaturen besonders günstige Eigenschaften hinsichtlich Wasserfestigkeit, Steinschlagbeständigkeit, Haftung und Witterungsstabilität erzielt. Derartige Härtungstemperaturen liegen z.B. bei 60 bis 80°C. Mit einem Einkomponenten-Klarlack sind Temperaturen unter 140°C, speziell 110 - 140°C bevorzugt.

Das Auftragen von Basecoat und Clearcoat kann in herkömmlicher Weise erfolgen, beispielsweise durch Streichen, Spritzen, Tauchen, Aufgießen oder Fluten. Bevorzugt wird der Spritzauftrag angewendet, weil hierbei die besten optischen Ergebnisse zu erzielen sind. Es können bekannte Spritzverfahren manuell oder automatisch angewendet werden, wie z.B. Druckluftspritzen, Airless-Spritzen, Heißspritzen oder elektrostatisches Spritzen.

Die Schichtdicken liegen bevorzugt bei 10 bis 30 µm Trockenfilmdicke für Überzüge aus erfindungsgemäßen Basislacken und bei 25 bis 50 µm für den Klarlack.

Bevorzugt werden Klarlacke aus thermoplastischen oder thermisch härtenden, filmbildenden, nichtvergilbenden Polymeren verwendet. Hierfür geeignete Bindemittelsysteme sind beispielsweise gesättigte Polyester und/oder Poly(meth)acrylatharze in Kombination mit Amin-Formaldehyd-Harzen (Einkomponenten-Systeme) oder mit nichtvergilbenden Polyisocyanaten (zweikomponenten-Systeme). Bevorzugt werden anionische Gruppen oder Anionen bildende Gruppen, wie Carboxylgruppen enthaltende Klarlacke. Durch Neutralisation einer geeigneten Menge an Carboxylgruppen können wasserverdünnbare Harze hergestellt werden. Als pulverförmige Klarlacke kommen übliche pulverförmige Materialien in Frage. Im allgemeinen basieren sie auf den gleichen Harzsystemen, liegen jedoch aufgrund ihrer Glasübergangstemperatur als feste Pulver vor. Die Klarlacke enthalten zur Stabilisierung gegen Lichteinwirkung im allgemeinen UV-Stabilisatoren und gegen Radikalbildung sogenannte Quentscher. Die Anwendung von wasserverdünnbaren Klarlacken ist bevorzugt. Besonders bevorzugt sind solche mit anionischen Gruppen oder Anionen bildenden Gruppen. Beispielsweise sind solche in der DE-A-39 10 829 beschrieben. Es handelt sich bei wasserverdünnbaren Klarlacken, wie sie beispielsweise in der DE-A-39 10 829 beschrieben werden, um wässrige Systeme auf Polyester- und Acrylharzbasis im Gemisch mit Aminharz und Neutralisationsmittel, die übliche Additive und/oder organische Lösemittel enthalten können. Sie enthalten als Bindemittel

A. 20 bis 45 Gew.% (bezogen auf den Festkörpergehalt des Bindemittels) eines Aminharzvernetzers und

B. 80 bis 55 Gew.% (bezogen auf den Festkörpergehalt des Bindemittels) eines nach Neutralisation mit Basen wasserlöslichen Polyesteroligomer-Polyacrylats mit einem Zahlenmittel des Molekulargewichts (Mn) von 800 bis 2000, hergestellt durch radikalische Polymerisation von mindestens

a) einem hydroxyfunktionellen (Meth)Acrylsäureester und
b) einer monofunktionellen α,β-ethylenisch ungesättigten Carbonsäure und
c) gegebenenfalls einem α,β-ethylenisch ungesättigten Monomeren ohne funktionelle Gruppen,

in 20 bis 50 Gew.% eines hydroxyfunktionellen Polyesteroligomeren,(wobei sich die Gewichtsprozente auf die Menge der Monomeren a) plus b) plus c) plus die Menge des hydroxyfunktionellen Polyesteroligomeren beziehen), erhältlich durch Polykondensation von Diolen, Polyolen und Dicarbonsäuren und deren Derivaten mit einer errechneten Molmasse von 200 bis 1000, einer Hydroxylzahl von 280 bis 600 und einer Säurezahl von 0 bis 1,5, wobei die Monomeren a), b) und c) in derartigen Mengen eingesetzt werden, daß das erhaltene Polyesteroligomer-Polyacrylat eine Hydroxylzahl von 150 bis 390 und eine Säurezahl von 16 bis 40 aufweist. Bevorzugt werden die eingesetzten Polyesteroligomer-Polyacrylate hergestellt durch radikalische Polymerisation der Monomeren a), b) und c) in einer Lösung des Polyester-Oligomeren in einem mit Wasser verträglichen bzw. in Wasser löslichem Lösemittel. Als wasserlösliche Lösemittel sind aliphatische Monoalkohole mit 2 bis 4 Kohlenstoffatomen besonders günstig. Bevorzugt ist als hydroxyfunktioneller (Meth)Acrylsäureester der Komponente B.a) Polypropylenglykolmonomethacrylat oder 4-Hydroxybutylacrylat.

Die erfindungsgemäßen Basecoats lassen sich insbesondere nach kurzem Vortrocknen bei 60 bis 80ºC ohne Schwierigkeiten mit lösemittelhaltigen oder wasserverdünnbaren Ein- oder Zweikomponenten-Klarlacken oder auch mit Pulver-Klarlacken überspritzen und anschließend zusammen 10 bis 60 Minuten lang bei Temperaturen von bevorzugt 110 bis 140°C einbrennen. Der Lackaufbau mit Hilfe des kationischen Basecoats gibt besonders bei Temperaturen unter den üblichen Einbrennbedingungen für Zwei-Komponenten-Klarlacke bessere Eigenschaftswerte als ein auf Basis anionischer Bindemittel aufgebauter Lack.

Die erfindungsgemäßen Mehrschichtüberzüge können auf elektrisch nicht leitende Oberflächen von verschiedenen Substraten aufgebracht werden. Beispielsweise kann es sich um Kunststoffsubstrate handeln. Bei Metallsubstraten werden übliche Grundierungen und gegebenenfalls weitere Zwischenschichten, wie Füllerschichten, verwendet. Es kann sich hierbei um

jegliche Art von Grundierung handeln, die in konventioneller Weise beispielsweise durch Sprühauftrag aufgetragen oder elektrophoretisch abgeschieden wurde. Die Natur derartiger Grundierungen und/oder Füller ist für die weitere Mehrschichtlackierung nicht ausschlaggebend. Es können sämtliche üblichen Materialien eingesetzt werden.

Die erfindungsgemäßen Mehrschichtlackierungen sind auf verschiedenen Gebieten einsetzbar. Sie sind für kleine und große Geräte geeignet. Besondere Bedeutung erlangen sie auf dem Gebiet der Lackierung von Kraftfahrzeugen und Kraftfahrzeugteile. Sie sind zur Serienlackierung sowie auch zur Ausführung von Reparaturen einsetzbar. Durch die erfindungsgemäßen Mehrschichtüberzüge werden optimale optische Eigenschaften bei ausgezeichneten Härte- und Elastizitätseigenschaften und hervorragender Wasserbeständigkeit bzw. Wetterfestigkeit erzielt.

Herstellungsbeispiel 1 (Amino-poly(meth)acrylatharz)

725 g Butoxyethanol werden unter Inertgas auf 110ºC unter Einschalten eines Rückflußkühlers erwärmt. Innerhalb von 3 Stunden wird eine Mischung aus 192 g Hydroxyethylacrylat, 137 g Butandiol-monoacrylat, 228 g Glycidylmethacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird 1 Stunde bei 110°C gehalten, 6 g Azo-bis-isobutyronitril zugegeben und dieser Vorgang nach einer weiteren Stunde wiederholt. Nach 3 Stunden 110°C wird ein Festkörpergehalt von 72.2 Gew.% und nach Verdünnen auf 60 Gew.% mit Butoxyethanol eine Viskosität von 2.14 Pa.s. bei 25°C gemessen. Nach Abkühlen auf 50°C werden ein Gemisch von 120 g Diethylamin und 201 g Isopropanol schnell zugegeben (1.10 Mol Amin auf 1.00 Mol Epoxid). Nach 30 Minuten wird auf 65°C erwärmt, dann 2 Stunden gehalten, anschließend auf 105 bis 110°C aufgeheizt und dann 3 Stunden gehalten. Nach Abkühlen auf 80°C wird unter Vakuum Isopropanol und Aminüberschuß sorgfältig abdestilliert. Einstellen des Festkörpergehaltes mit Butoxyethanol auf etwa 78 Gew.%.

Endwerte:

Festkörpergehalt: 78,7 Gew.% (30 Minuten Erwärmen auf 150°C)

Aminzahl: 45 mg KOH pro g Festharz

Viskosität: 3.44 Pa.s (60 Gew.% in Butoxyethanol bei 25°C)

Das Harz ist beim Lagern viskositätsstabil und gibt nach Kombination mit Vernetzungsmitteln nichtvergilbende glatte Oberflächen.

Herstellungsbeispiel 2 (Polyurethan-Dispersion)

In einem Reaktionsgefäß mit Rührer, Innenthermometer, Heizung und Rückflußkühler werden unter Inertgas 912 g eines Polyesters (aufgebaut aus Adipinsäure, Isophthalsäure, Hexandiol-1.6, und Neopentylglykol mit einer OH-Zahl von 113 und einer Säurezahl von 1) bei ca. 45°C gemischt mit 191 g Methyldiethanolamin und 185 g N-Methylpyrrolidon. Anschließend werden 697 g Isophorondiisocyanat zugegeben und die exotherme Reaktion durch Kühlen und Heizen bei 80°C gehalten, bis die NCO-Zahl ca. 3.3 beträgt. Nach Zusatz von 185 g N-Methylpyrrolidon wird auf Raumtemperatur gekühlt. Innerhalb von 5 Minuten werden 32.6 g Ethylendiamin in 485 g trocknem Aceton zugegeben, wobei die Temperatur bis auf 35°C ansteigt. Nach 10 Minuten wird ein Gemisch aus 152 g vollentsalztem Wasser und 63.4 g Ameisensäure (85%ig) eingerührt und danach unter Zusatz von 2026 g Wasser eine Emulsion hergestellt. Das Aceton wird durch Aufheizen auf 90°C gegebenenfalls unter Anlegen von Vakuum abdestilliert.

Endwerte:

Festkörpergehalt: 42 Gew.-% (60 Minuten Erwärmen auf 150°C)

Aminzahl: 52 mg KOH pro g Festharz

MEQ-Wert: ca. 60 (milliäquivalente Säure pro g Festharz)

Neutralisationsgrad: 75 %.

Herstellungsbeispiel 3 (wässriger Klarlack nach DE-A 39 10 829, Beisp. 3)

Herstellung eines Polyesteroligomeren

336,7 g Trimethylolpropan, 366,8 g Adipinsäure und 297 g Hexandiol werden mit 5 g unterphosphoriger Säure in einem mit Rüher, Abscheider, Thermometer und Rückflußkühler versehenen 2-Liter-Dreihalskolben bei 180ºC bis 230ºC in der Schmelze auf eine Säurezahl von 20 verestert. Anschließend wird unter Vakuum bis zu einer Säurezahl <1,5 kondensiert. Das so erhaltene Produkt hat einen Einbrennrückstand von 94,5 Gew.% (1 h, 150ºC), eine Viskosität von 3200 mPa.s (100%ig), eine Hydroxylzahl von 460 und eine Farbzahl von 30 Hazen.

Herstellung von Polyesteroligomer-Polyacrylaten

717 g des vorstehend hergestellten Polyesteroligomeren werden mit 597 g Ethanol in einem Rührer, Rückflußkühler, Tropftrichter und Thermometer versehenen 4-Liter-Dreihalskolben auf 81°C bis zum Rückfluß erhitzt. Anschließend wird in 4 Stunden eine Mischung aus 552 g Butandiolmonoacrylat, 996 g tert.Butylacrylat, 74 g Acrylsäure und 50 g Vazo 67 (2,2-Azo-bis-2-Methylbutyronitril) zugetropft und anschließend 4 Stunden nachpolymerisiert. Das Produkt hatte einen Einbrennrückstand von 79,8 Gew.% (1 h, 150°C) bei einer Viskosität von 7200 mPa.s (DIN 53015), eine Säurezahl von 26,3, eine OH-Zahl von 231 und eine Farbzahl von 60 Hazen.

Herstellung des wasserverdünnbaren Klarlacks

651,2 g des vorstehend hergestellten Polyesteroligomer-Polyacrylats, 348 g eines käuflichen hochiminofunktionellen Melaminharzes und 152,8 g Ethanol wurden unter einem Laborrührer gut vorgemischt und unter weiterem Rühren mit einem Gemisch aus 50,7 g Butoxyethanol, 20,7 g eines UV-Absorbers vom Benztriazoltyp und 13,7 g eines Radikalfängers vom HALS-Typ (HALS = hindered amine light stabilisator) versetzt. Danach wurde unter Rühren mit 27 g Dimethylethanolamin neutralisiert, weitere 15 Minuten gerührt und anschließend mit einem Gemisch aus 972,6 g vollentsalztem Wasser und 15,4 g Ethanol verdünnt. Der Lack hatte eine Viskosität von 31 Sekunden (gemessen im DIN-4-Becher bei 20°C) und einen pH-Wert von 9,0.

Beispiel 1

Zu 945 g Amino-poly(meth)acrylatharz nach Herstellungsbeispiel 1 werden 555 g Titandioxid gegeben und 5 Minuten mit dem Dissolver dispergiert. Anschließend wird die Paste 40 Minuten bei Temperaturen bis zu 60°C in einer Perlmühle vermahlen.
Festkörper: 86.6 Gew.-% (nach 30 Minuten Erwärmen auf 150°C)
Pigment-Bindemittelverhältnis = 0.75 : 1.

772 g der Paste werden zusammen mit 111 g eines höhermolekularen Methoxy-Iminogruppen enthaltenden Melaminharzes (80%ig gelöst in Isobutanol), und 17.7 g einer amingeblockten Sulfonsäure (25%ig) als Katalysator unter dem Dissolver gut verrührt. Anschließend wird im Dissolver unter gutem Rühren weiter verdünnt, und zwar erst mit 7.6 g Ameisensäure (85%ig) und dann langsam mit 142 g vollentsalztem Wasser. Nach Stehen über Nacht wurden 100 g des Lackes mit 62 g vollentsalztem Wasser auf eine Spritzviskosität von 30 Sekunden im Auslaufbecher (DIN 53 211) eingestellt und mit dem Spritzautomaten auf grundierte Bleche gespritzt.

Der Basislack wird 6 Minuten bei 80°C vorgetrocknet und anschließend mit ca. 40 µm Wasser-Klarlack nach Herstellungsbeispiel 3 überlackiert. Es wird 15 Minuten bei 80°C vorgeliert und danach beide Schichten gemeinsam 20 Minuten bei 120°C eingebrannt (Unterbrennbedingung).

Beispiel 2

255 g übliches Pastenharz (hergestellt nach DE-C-36 28 123, bzw. Korrespondierester US-A-4 839 414, Beispiel 4, Tabelle 2) mit einem Festkörper von 45 Gew.% und einer Viskosität von 570 mPa.s bei 25°C werden mit 1185 g Titandioxid und 167 g Butoxyethanol gemischt und 5 Minuten mit dem Dissolver dispergiert. Anschließend wird die Paste 40 Minuten bei Temperaturen bis zu 60°C in der Perlmühle vermahlen.
Festkörper: 80.8 Gew.% (nach 30 Minuten Erwärmen auf 150°C)
Pigment-Bindemittelverhältnis = 10 : 1.

255 g der Paste werden zusammen mit 550 g Polyurethan-Dispersion (Herstellungsbeispiel 2) und 78 g eines höhermolekularen Methoxy-Iminogruppen enthaltenden Melaminharzes (80%ig gelöst in Isobutanol) und 12.4 g einer amingeblockten Sulfonsäure (25%ig) unter dem Dispermaten gut verrührt. Anschließend wird unter dem Dissolver unter gutem Rühren weiter verdünnt, und zwar erst mit 0.8 g Ameisensäure (85%ig) und dann langsam mit 150 g Wasser. Nach Stehen über Nacht wurden 100 g des Lackes mit 15 g vollentsalztem Wasser auf Spritzviskosität eingestellt und damit Prüfbleche wie in Beispiel 1 hergestellt.

Sowohl im Beispiel 1 als auch im Beispiel 2 werden harte, gegen Wasser-Klarlacke anlöseresistente Basecoats mit verbesserter Elastizität und höherer Schwitzkastenbeständigkeit als bei derzeit üblichen anionischen Basecoats erhalten.

**Patentansprüche**

1. Verfahren zur Herstellung eines Mehrschichtüberzugs auf einer elektrisch nicht leitenden Oberfläche eines mit einer üblichen Grundierung und gegebenenfalls einem üblichen Füller versehenen Substrats, **gekennzeichnet durch** Auftrag eines wässrigen Basislacks aus einer deckende, transparente und/oder effektgebende Pigmente und gegebenenfalls Füllstöffe, sowie gegebenenfalls übliche Lackadditive, und bis zu 15 Gew.%, bezogen auf den für den Auftrag fertigen Basislack, organische Lösemittel enthaltenden wässrigen Dispersion von

   A) 70 bis 100 Gew.% eines mit Säuren vollständig oder teilweise neutralisierten kationischen Poly(meth)acrylat-, Polyester-, Polyurethan- und/oder Polyurethan-Harnstoff-Harzes, mit einem Zahlenmittel der Molmasse ($\overline{M}n$) von 500 bis 500000, einer OH-Zahl von 0 bis 450, einer Aminzahl von 20 bis 200 und einer Glasübergangstemperatur von -50 bis +150°C und

   B) 0 bis 30 Gew.% eines Amin-Formaldehyd-Kondensationsharzes und/oder blockierten Polyisocyanats, jeweils mit mindestens zwei gegenüber den Amino- und/oder OH-Gruppen und/oder Urethan- und/oder Harnstoff-Gruppen der Komponente A) reaktiven Gruppen pro Molekül,

   wobei sich die Gewichtsprozente der Komponenten A) und B) jeweils auf Festharz beziehen und sich auf 100 Gew.% addieren, und das Verhältnis von Pigment und Füllstoffen zu der Summe der Komponenten A) und B) 0,05 bis 1,2 zu 1, bezogen auf das Festkörpergewicht und der Gesamtfestkörpergehalt des Basislacks 15 bis 50 Gew.% betragen, anschließenden Auftrag eines Klarlacks auf Basis lösemittelhaltiger oder wasserhaltiger nichtpigmentierter Harze oder eines Klarlackpulvers, wobei Basis- und Klarlack entweder getrennt oder gemeinsam, gegebenenfalls nach kurzem Zwischentrocknen bei Temperaturen unter 160°C gehärtet werden.

2. Verfahren nach Anspruch 1, dadurch gekennzeichnet, daß ein Basislack mit einem Metallic-Pigment als effektgebendes Pigment, gegebenenfalls unter Zusatz von farbgebenden Pigmenten, eingesetzt wird, der einen Gesamtfestkörpergehalt von 15 bis 30 Gew.% aufweist.

3. Verfahren nach Anspruch 1, dadurch gekennzeichnet, daß ein Basislack mit deckenden Pigmenten mit einem Gesamtfestkörpergehalt von 30 bis 50 Gew.% eingesetzt wird.

4. Verfahren nach einem der Ansprüche 1 bis 3, dadurch gekennzeichnet, daß ein Basislack eingesetzt wird, dessen Komponente A) ein Poly(meth) acrylatharz und/oder Polyesterharz mit einem Zahlenmittel der Molmasse ($\overline{M}n$) von 500 bis 50000 und einer OH-Zahl von 30 bis 200 ist.

5. Verfahren nach einem der Ansprüche 1 bis 3, dadurch gekennzeichnet, daß ein Basislack eingesetzt wird, dessen Komponente A) ein Polyurethan- und/oder Polyurethan-Harnstoff-Harz ist, mit einem Zahlenmittel der Molmasse ($\overline{M}n$) von 3000 bis 500000 und einer OH-Zahl von 0 bis 50.

6. Verfahren nach einem der Ansprüche 1 bis 5, dadurch gekennzeichnet, daß ein Basislack eingesetzt wird, dessen Komponente A) eine Aminzahl von 30 bis 150 aufweist.

7. Verfahren nach einem der Ansprüche 1 bis 6, dadurch gekennzeichnet, daß der Auftrag des Basislacks durch Spritzen, Streichen, Tauchen, Aufgießen oder Fluten erfolgt.

8. Verfahren nach einem der Ansprüche 1 bis 7, dadurch gekennzeichnet, daß der Auftrag des Klarlacks durch Spritzen, Streichen, Tauchen oder Fluten erfolgt.

9. Verfahren nach einem der vorhergehenden Ansprüche, dadurch gekennzeichnet, daß ein Klarlack mit anionischen Gruppen oder zur Anionenbildung befähigten Gruppen verwendet wird.

10. Verfahren nach einem der vorhergehenden Ansprüche, dadurch gekennzeichnet, daß ein wässriger Klarlack verwendet wird.

11. Verfahren nach einem der vorhergehenden Ansprüche, dadurch gekennzeichnet, daß es zur Mehrschichtlackierung von Kraftfahrzeugen oder Kraftfahrzeugteilen in Serie oder zur Reparatur durchgeführt wird.

**Claims**

1. A process for preparing a multi-layered coating on an electrically non-conducting surface of a substrate provided with a conventional primer and optionally a conventional filler,
characterised by the application of an aqueous base lacquer consisting of an opaque, transparent and/or effect-providing pigments and optionally fillers and also optionally conventional lacquer additives, and up to 15 wt.%, with respect to the base lacquer as made up for application, of organic solvent containing aqueous dispersion of

    A) 70 to 100 wt.% of a cationic poly(meth)acrylate, polyester, polyurethane and or polyurethane/urea resin which is completely or partly neutralised with acid, with a number average molecular weight ($\overline{M}n$) of 500 to 500000, an OH value of 0 to 450, an amine value of 20 to 200 and a glass transition temperature of -50 to +150°C and
    B) 0 to 30 wt.% of an amine/formaldehyde condensation resin and/or blocked polyisocyanate, each with at least two groups per molecule which can react with the amino and/or OH groups and/or urethane and/or urea groups in component A),

wherein the percentages by weight of components A) and B) each refer to solid resin and add up to 100 wt.%, and the ratio of pigment and fillers to the sum of components A) and B) is 0.05 - 1.2 to 1, with respect to the weight of solids, and the total solids content of the base lacquer is 15 to 50 wt.%, followed by application of a clear lacquer based on solvent-containing or water-containing non-pigmented resins or a clear powder coating, wherein the base lacquer and clear lacquer are cured either separately or together at temperatures of less than 160°C, optionally after a short intermediate drying phase.

2. A process according to Claim 1, characterised in that a base lacquer with a metallic pigment, as an effect-providing pigment, optionally with the addition of colour-providing pigments, is used which has a total solids content of 15 to 30 wt.%.

3. A process according to Claim 1, characterised in that a base lacquer with opaque pigments with a total solids content of 30 to 50 wt.% is used.

4. A process according to one of Claims 1 to 3, characterised in that a base lacquer is used in which

component A) is a poly(meth)acrylate resin and/or a polyester resin with a number average molecular weight ($\overline{M}n$) of 500 to 50000 and an OH value of 30 to 200.

5. A process according to one of Claims 1 to 3, characterised in that a base lacquer is used in which component A) is a polyurethane resin and/or a polyurethane/urea resin with a number average molecular weight ($\overline{M}n$) of 3000 to 500000 and an OH value of 0 to 50.

6. A process according to one of Claims 1 to 5, characterised in that a base lacquer is used in which component A) has an amine value of 30 to 150.

7. A process according to one of Claims 1 to 6, characterised in that the base lacquer is applied by spraying, brushing, dipping, casting or flooding.

8. A process according to one of Claims 1 to 7, characterised in that the clear lacquer is applied by spraying, brushing, dipping or flooding.

9. A process according to one of the preceding Claims, characterised in that a clear lacquer with anionic groups or groups capable of forming anions is used.

10. A process according to one of the preceding Claims, characterised in that an aqueous clear lacquer is used.

11. A process according to one of the preceding Claims, characterised in that it is performed for the multi-layered lacquering of motor vehicles or parts of motor vehicles during mass production or for repair purposes.

**Revendications**

1. Procédé pour fabriquer un revêtement multicouche sur une surface, non conductrice électriquement, d'un substrat muni d'une couche de base usuelle et éventuellement d'un pigment de charge usuel, caractérisé par les étapes consistant à déposer une laque de base aqueuse constituée d'une dispersion aqueuse

   A) de 70 à 100% en poids d'une résine poly (méth)acrylate, polyester, polyuréthane et/ou polyuréthane urée cationique complètement ou partiellement neutralisée avec un acide, ayant une masse molaire moyenne en nombre ($\overline{M}n$) comprise entre 500 et 500000, un indice OH compris entre 0 et 450, un indice d'amine compris entre 20 et 200 et une température de transition vitreuse comprise entre -50 et +150°C et

   B) de 0 à 30% en poids d'une résine de condensation amine formaldéhyde et/ou d'un polyisocyanate bloqué, avec au moins respectivement deux groupes réactifs vis à vis des groupes amino et/ou OH et/ou uréthane et/ou urée du composant A) par molécule,

contenant des pigments couvrants, transparents et/ou à effet et éventuellement des charges, et éventuellement des additifs usuels des peintures, et jusqu'à 15% en poids,
par rapport à la laque de base prête à être déposée, de solvants organiques,
où les pourcentages en poids des composants A) et B) se rapportent respectivement à la résine solide et s'ajoutent pour donner un total de 100% en poids, et le rapport du pigment et des charges sur la somme des composants A) et B) varie de 0,05 à 1,2 sur 1, par rapport au poids de matière solide et la teneur globale en matière solide de la laque de base s'élève à entre 15 et 50% en poids, puis à déposer un vernis incolore à base de résines non pigmentées contenant de l'eau ou contenant des solvants ou un vernis incolore en poudre, la laque de base et le vernis incolore étant durcis au-dessous de 160°C, soit séparément ou ensemble, éventuellement après un court séchage intermédiaire.

2. Procédé selon la revendication 1, caractérisé en ce qu'on utilise une laque de base avec un pigment métallique comme pigment à effet, éventuellement en ajoutant des pigments colorants, qui présente une teneur globale en matière solide de 15 à 30% en poids.

3. Procédé selon la revendication 1, caractérisé en ce qu'on utilise une laque de base avec un pigment couvrant ayant une teneur globale en matière solide de 30 à 50% en poids.

4. Procédé selon l'une des revendications 1 à 3, caractérisé en ce qu'on utilise une laque de base dont le composant A) est une résine poly(méth)acrylate et/ou une résine polyester ayant une masse molaire moyenne en nombre ($\overline{M}n$) de 500 à 50000 et un indice OH de 30 à 200.

5. Procédé selon l'une des revendications 1 à 3, caractérisé en ce qu'on utilise une laque de base dont le composant A) est une résine polyuréthane et/ou une résine polyuréthane urée, ayant une masse molaire moyenne en nombre ($\overline{M}n$) de 3000 à 500000 et un indice OH de 0 à 50.

6. Procédé selon l'une des revendications 1 à 5, caractérisé en ce qu'on utilise une laque de base dont

le composant A) présente un indice d'amine variant de 30 à 150.

**7.** Procédé selon l'une des revendications 1 à 6, caractérisé en ce que le dépôt de la laque de base est réalisé par pulvérisation, peinture, au trempé, par coulée ou injection.

**8.** Procédé selon l'une des revendications 1 à 7, caractérisé en ce que le dépôt de la laque de base est réalisé par pulvérisation, peinture, au trempé, ou par injection.

**9.** Procédé selon l'une des revendications précédentes, caractérisé en ce qu'on utilise un vernis transparent ayant des groupes anioniques ou des groupes capables de former des anions.

**10.** Procédé selon l'une des revendications précédentes, caractérisé en ce qu'on utilise un vernis transparent aqueux.

**11.** Procédé selon l'une des revendications précédentes, caractérisé en ce qu'il est utilisé pour la peinture multicouche de véhicules à moteur ou de pièces de véhicules à moteur pour la fabrication en série ou pour la réparation.